# EUROPEAN PATENT APPLICATION

(11) **EP 4 447 545 A1**
(43) Date of publication of application: **16.10.2024**
(21) Application number: 22914247.6
(22) Date of filing: 13.12.2022
(51) Int. Cl.: H04W 36/00

(54) **COMMUNICATION METHOD AND APPARATUS**

(30) Priority: 28.12.2021 CN 202111627665; 30.01.2022 CN 202210114805
(71) Applicant: Huawei Technologies Co., Ltd., Shenzhen, Guangdong 518129 (CN)
(72) Inventor: DOU, Fenghui, Shenzhen, Guangdong 518129 (CN); WANG, Zhifeng, Shenzhen, Guangdong 518129 (CN); JIN, Hui, Shenzhen, Guangdong 518129 (CN); XUE, Yifan, Shenzhen, Guangdong 518129 (CN)
(74) Representative: Maiwald GmbH
(86) International application number: PCT/CN2022/138830
(87) International publication number: WO 2023/124992

(57) **Abstract**

This application provides a communication method and apparatus, and relates to the field of wireless communication technologies, so that a terminal device can perform handover, redirection, or reselection between an equivalent public land mobile network EPLMN and a home public land mobile network HPLMN, thereby shortening or eliminating service transmission interruption time and improving user experience. The method includes: A first access network device obtains HPLMN information of a terminal device, where the first access network device is an access network device in a PLMN currently accessed by the terminal device, and the PLMN currently accessed by the terminal device is different from an HPLMN of the terminal device. The first access network device sends first information to the terminal device based on the HPLMN information of the terminal device, where the first information is related to the HPLMN of the terminal device, and the first information is used by the terminal device to perform measurement, HPLMN search, or reselection.

## Description

This application claims priorities to Chinese Patent Application No. 202111627665.1, filed with the China National Intellectual Property Administration on December 28, 2021 and entitled "MOBILITY MANAGEMENT METHOD, UE, AND NETWORK DEVICE", and to Chinese Patent Application No. 202210114805.3, filed with the China National Intellectual Property Administration on January 30, 2022 and entitled "COMMUNICATION METHOD AND APPARATUS", both of which are incorporated herein by reference in their entireties.

### TECHNICAL FIELD

Embodiments of this application relate to the wireless communication field, and in particular, to a communication method and apparatus.

### BACKGROUND

Different network operators have different network coverage conditions in different areas. For example, in remote areas of China, network coverage of China Mobile is present, but network coverage of China Telecom or China Unicorn is absent. In this case, China Mobile provides a shared network for China Telecom, China Unicom, or the like, so that a terminal device of another network operator can access the network.

### SUMMARY

For a terminal device of another network operator, for example, China Telecom or China Unicom, when the terminal device moves between a coverage area of a home network of the terminal device and a coverage area of a shared network, a series of problems such as handover are involved. How to provide a handover method between the shared network and the home network of the terminal device is an urgent problem to be resolved.

Embodiments of this application provide a communication method and apparatus, so that the terminal device can perform handover, redirection, or reselection between the shared network and the home network, to shorten or eliminate service transmission interruption time and improve user experience.

To achieve the foregoing objectives, the following technical solutions are used in embodiments of this application.

According to a first aspect, this application provides a communication method. The method may be performed by a first access network device or a chip used in the first access network device. An example in which the method is performed by the first access network device is used below for description. The method includes: The first access network device obtains home public land mobile network HPLMN information of a terminal device, where the first access network device is an access network device in a PLMN currently accessed by the terminal device, and the PLMN currently accessed by the terminal device is different from an HPLMN of the terminal device; and the first access network device sends first information to the terminal device based on the information about the HPLMN of the terminal device, where the first information is related to the HPLMN of the terminal device, and the first information is used by the terminal device to perform measurement, HPLMN search, or reselection.

In this way, after obtaining the information about the HPLMN, the first access network device may determine that the terminal device is in a roaming state, and then send the first information to the terminal device. Because the first information is related to the HPLMN of the terminal device, when performing measurement based on the first information, the terminal device may perform inter-network measurement, to lay a basis for the terminal device to be handed over or redirected from the currently accessed PLMN to the HPLMN. When performing an HPLMN search based on the first information, the terminal device may find a frequency in the HPLMN. This lays a basis for generating an inter-network measurement report and for handover or redirection to the HPLMN. When the terminal device performs reselection based on the first information, because the first information is related to the HLMN, the terminal device can also perform reselection from the currently accessed PLMN to the HPLMN, to normally perform service transmission. This helps improve user experience.

In a possible design, the first information indicates to start to search for the HPLMN of the terminal device, so that the terminal device is handed over (or redirected, or reselected) to the HPLMN in time.

In a possible design, the first information includes a cell selection policy. The cell selection policy is further related to the PLMN currently accessed by the terminal device, and measurement configuration information is used by the terminal device to perform reselection.

In a possible design, the cell selection policy indicates that a first priority is higher than a second priority. The first priority is a reselection priority of a first cell in the HPLMN of the terminal device, and the second priority is a reselection priority of a second cell in the PLMN currently accessed by the terminal device, so that the terminal device reselects the HPLMN in time.

In a possible design, the first information includes measurement configuration information. The measurement configuration information includes information about a frequency in the HPLMN of the terminal device and information about measurement gap duration of the frequency. The measurement configuration information is used by the terminal device to determine a time domain resource (or resources) on which the frequency in the HPLMN is to be measured.

In a possible design, the frequency in the HPLMN of the terminal device includes at least one of the following: a frequency of a first communication standard in the HPLMN of the terminal device, or a frequency of a second communication standard in the HPLMN of the terminal device. The first communication standard is different from the second communication standard. For example, the first communication standard may be a 5G network, and the second communication standard may be a 4G network, a 3G network, or a 2G network. Alternatively, the first communication standard may be a 4G network, and the second communication standard may be a 3G network or a 2G network. Alternatively, the first communication standard may be a 3G network, and the second communication standard may be a 2G network.

In other words, the measurement configuration information may configure frequencies of at least two communication standards in the HPLMN, so that the terminal device can search for and measure the frequencies of the at least two communication standards in the HPLMN. In this way, the terminal device is handed over (or redirected, or reselected) to a communication standard network with a better measurement result, to implement better data transmission performance.

In a possible design, that the first access network device obtains home public land mobile network HPLMN information of a terminal device includes: The first access network device receives a first message from a first core network device. The first message includes the information about the HPLMN of the terminal device. The first core network device is a core network device in the PLMN currently accessed by the terminal device, so that the first access network device perceives the information about the HPLMN of the terminal device.

In a possible design, the first message includes an initial context setup request message.

In other words, the first access network device may obtain the information about the HPLMN in a registration procedure.

In a possible design, that the first access network device obtains home public land mobile network HPLMN information of a terminal device includes: The first access network device receives a second message from the terminal device. The second message includes information about the PLMN currently accessed by the terminal device. There is a correspondence between the PLMN currently accessed by the terminal device and the HPLMN of the terminal device. The first access network device determines the information about the HPLMN of the terminal device based on the second message and the correspondence.

In this way, the terminal device reports, to the first access network device, the information about the PLMN selected by the terminal device for access, and the first access network device may perceive, based on the information about the PLMN currently accessed by the terminal device and the correspondence, the information about the HPLMN of the terminal device.

In a possible design, that the first access network device obtains home public land mobile network HPLMN information of a terminal device includes: The first access network device receives a third message from the terminal device. The third message includes the information about the HPLMN. In other words, the terminal device directly reports the information about the HPLMN to the first access network device, so that the first access network device perceives the information about the HPLMN of the terminal device.

In a possible design, the communication method in this embodiment of this application further includes: The first access network device sends a fourth message to a second access network device. The fourth message includes the information about the HPLMN of the terminal device. The first access network device is an access network device before the terminal device is handed over, and the second access network device is an access network device after the terminal device is handed over. The second access network device and the first access network device belong to a same PLMN. The fourth message is used by the second access network device to send second information based on the information about the HPLMN of the terminal device, and the second information is related to the HPLMN of the terminal device. The second information is used by the terminal device to perform measurement, HPLMN search, or reselection.

In this way, even if the terminal device moves in the currently accessed PLMN, and the second access network device provides a service for the terminal device after the terminal device moves, the first access network device can send the information about the HPLMN to the second access network device, so that the second access network device determines information related to the HPLMN, and the terminal device can be handed over (or redirected, or reselected) to the HPLMN in time.

In a possible design, the communication method in this embodiment of this application further includes: The first access network device sends a handover required (handover required) message to a first core network device. The first access network device is an access network device before the terminal device is handed over, and the first core network device is a core network device in the PLMN currently accessed by the terminal device. The first core network device sends the information about the HPLMN of the terminal device to the second access network device based on the handover required message. The second access network device is an access network device after the terminal device is handed over. The second access network device sends second information to the terminal device based on the information about the HPLMN of the terminal device. The second information is related to the HPLMN of the terminal device, and the second information is used by the terminal device to perform measurement, HPLMN search, or reselection. For the handover required message, refer to a specification in the related 3GPP technical specification. Details are not described herein again.

In this way, even if the terminal device moves in the currently accessed PLMN, and the second access network device provides a service for the terminal device after the terminal device moves, the first core network device can send the information about the HPLMN to the second access network device, so that the second access network device determines third information related to the HPLMN, and the terminal device can be handed over (or redirected, or reselected) to the HPLMN in time.

In a possible design, the handover required message includes the information about the HPLMN of the terminal device.

In this way, even if the terminal device moves in the currently accessed PLMN, and the second access network device provides a service for the terminal device after the terminal device moves, the first access network device can send the information about the HPLMN to the second access network device by using the first core network device, so that the second access network device determines information related to the HPLMN, and the terminal device can be handed over (or redirected, or reselected) to the HPLMN in time.

In a possible design, the communication method in this embodiment of this application further includes: The first access network device receives a measurement report from the terminal device, where the measurement report is determined based on the measurement configuration information; and the first access network device sends the first message to the terminal device, where the first message indicates a target cell. The target cell is determined based on the measurement report and priority information. The target cell belongs to a cell in the HPLMN of the terminal device. The priority information indicates that a third priority is higher than a fourth priority. Both the third priority and the fourth priority are handover priorities or redirection priorities. The third priority is a priority of the cell in the HPLMN of the terminal device, and the fourth priority is a priority of a cell in the PLMN currently accessed by the terminal device.

In other words, the first access network device further refers to the priority information when determining the target cell. Because the priority information indicates that the priority of the cell in the HPLMN is higher than the priority of the cell in the PLMN currently accessed by the terminal device, the terminal device can be preferentially handed over or redirected to the HPLMN.

According to a second aspect, this application provides a communication method. The method may be performed by a terminal device or a chip used in the terminal device. An example in which the method is performed by the terminal device is used below for description. The method includes: The terminal device receives first information from an access network device in a first public land mobile network PLMN. The first PLMN is a PLMN currently accessed by the terminal device, the first information is used by the terminal device to determine to search for a second PLMN, and the first PLMN is different from the second PLMN. The terminal device searches for the second PLMN for camping based on the first information.

In this way, for the terminal device currently accessing the first PLMN, because the first information enables the terminal device to determine an occasion for searching for the second PLMN, the terminal device can search for the second PLMN in time, so that the terminal device camps on the second PLMN from the currently accessed first PLMN. This shortens or eliminates service transmission interruption time, ensures normal service transmission, and improves user experience.

In a possible design, the first PLMN includes an HPLMN of the terminal device, and the second PLMN includes an equivalent public land mobile network EPLMN of the terminal device.

In a possible design, the communication method in this embodiment of this application further includes: The terminal device receives second information from a core network device in the first PLMN. The second information includes information about an area covered by the second PLMN. That the terminal device searches for the second PLMN for camping based on the first information includes: The terminal device determines, based on a location area in which the access network device is located and the second information, that the terminal device is located in an area indicated by the second information. The first information includes information about the location area in which the access network device is located. When the terminal device is in the area indicated by the second information, the terminal device searches for the second PLMN for camping.

In this way, when the first PLMN is the HPLMN of the terminal device, the terminal device determines, based on the location area in which the access network device is located in the HPLMN, whether the terminal device is located in a coverage area of the EPLMN. If yes, the terminal device searches for the EPLMN in time. In this way, the terminal device camps on the EPLMN from the HPLMN in time. This reduces a probability of network disconnection, shortens or eliminates service transmission interruption time, and improves user experience.

In a possible design, the area in the second information includes at least one of the following: an overlapping area, a boundary area, or a first area. The overlapping area is an area in which a service area of the core network device overlaps the area covered by the second PLMN. The boundary area is an area, in the overlapping area, whose distance from a boundary of the overlapping area is less than a first threshold. The first area is an area, in the boundary area, whose distance from the terminal device is less than a second threshold.

In a possible design, the terminal device is located within the boundary area, or the terminal device is located outside the boundary area.

In a possible design, the terminal device receives the second information from the core network device by using an attach accept message, so that the terminal device obtains the second information in an attach process. For the terminal device, the terminal device can determine, in time based on the location area in which the access network device is located in the HPLMN, whether the terminal device is in the area indicated by the second information, so that the terminal device camps on the EPLMN in time from the HPLMN that is currently accessed. This reduces a probability of network disconnection, and shortens or eliminates service transmission interruption time.

In a possible design, the second information is transmitted by using a tracking area update TAU accept message, so that the terminal device obtains the second information in a TAU process. For the terminal device, the terminal device can determine, in time based on the location area in which the access network device is located in the HPLMN, whether the terminal device is in the area indicated by the second information, so that the terminal device camps on the EPLMN in time from the HPLMN that is currently accessed. This reduces a probability of network disconnection, and shortens or eliminates service transmission interruption time.

In a possible design, the second information is transmitted by using a user equipment configuration update message, so that the terminal device obtains the second information in a configuration update process. For the terminal device, the terminal device can determine, in time based on the location area in which the access network device is located in the HPLMN, whether the terminal device is in the area indicated by the second information, so that the terminal device camps on the EPLMN in time from the HPLMN that is currently accessed. This reduces a probability of network disconnection, and shortens or eliminates service transmission interruption time.

In a possible design, the first PLMN includes an EPLMN of the terminal device, and the second PLMN includes an HPLMN of the terminal device.

In a possible design, the communication method in this embodiment of this application further includes: The terminal device receives second information from a core network device in the first PLMN. The second information indicates at least a partial coverage area of the first PLMN, and the partial coverage area of the first PLMN belongs to a boundary area of the first PLMN. That the terminal device searches for the second PLMN for camping based on the first information includes: The terminal device determines, based on a location area in which the access network device is located and the second information, that the terminal device is located in an area indicated by the second information. The first information includes information about the location area in which the access network device is located. When the terminal device is in the area indicated by the second information, the terminal device searches for the second PLMN for camping.

In this way, when the first PLMN is an EPLMN of the terminal device, the terminal device determines, based on the location area in which the access network device is located in the EPLMN, whether the terminal device is located in a boundary area of the EPLMN. If yes, the terminal device searches for the HPLMN in time. In this way, the terminal device is handed over from the currently accessed EPLMN to the HPLMN in time. This reduces a probability of network disconnection, shortens or eliminates service transmission interruption time, and improves user experience.

In a possible design, the partial coverage area of the first PLMN includes at least one of the following: an overlapping area or a first area. The overlapping area is an area in which a service area of the core network device overlaps the boundary area of the first PLMN, and the first area is an area, in the overlapping area, whose distance from the terminal device is less than a second threshold.

In a possible design, the second information is transmitted by using a registration accept message, so that the terminal device obtains the second information in a registration process. In this way, the terminal device can determine, in time based on the location area in which the access network device is located in the first PLMN, whether the terminal device is in the area indicated by the second information, so that the terminal device camps on the second PLMN in time from the first PLMN that is currently accessed. This reduces a probability of network disconnection, and shortens or eliminates service transmission interruption time.

In a possible design, that the terminal device searches for the second PLMN for camping based on the first information includes: The terminal device searches for the second PLMN for camping based on second PLMN information. The first information includes the second PLMN information.

In other words, the first information sent by the access network device in the first PLMN includes the second PLMN information, namely, inter-network information, so that the terminal device searches for the second PLMN for camping. This reduces a probability of network disconnection, shortens or eliminates service transmission interruption time, and improves user experience.

In a possible design, the terminal device receives the first information from the access network device by using a system message (system information), so that the terminal device in an idle state can obtain the first information, to search for the second PLMN for camping in time. For the system message, refer to a specification in the related 3GPP technical specification. Details are not described herein again.

In a possible design, the system message carries the first information by using a system information block SIB, and the SIB includes at least one of the following: a first SIB, a second SIB, or a third SIB.

The first SIB is a SIB used to carry intra-frequency information, the intra-frequency information includes information sbout a frequency in the second PLMN, and the frequency in the intra-frequency information is the same as a frequency of a cell on which the terminal device currently camps. For example, the first SIB may be a SIB 3 specified in the related 3GPP technical specification.

The second SIB is a SIB used to carry inter-frequency information, the inter-frequency information includes information about a frequency in the second PLMN, and the frequency in the inter-frequency information is different from a frequency of a cell on which the terminal device currently camps. For example, the second SIB may be a SIB 4 specified in the related 3GPP technical specification.

The third SIB is a SIB used to carry inter-system information, the inter-system information includes information about a communication standard of the second PLMN, and the communication standard in the inter-system information is different from a communication standard of the cell on which the terminal device currently camps. For example, the third SIB may be a SIB 5 specified in the related 3GPP technical specification.

According to a third aspect, this application provides a communication apparatus. The communication apparatus may be the first access network device in the first aspect or any possible design of the first aspect, or a chip that implements functions of the first access network device. The communication apparatus includes a corresponding module, unit, or means (means) for implementing the foregoing method. The module, unit, or means may be implemented by hardware, implemented by software, or implemented by hardware by executing corresponding software. The hardware or the software includes one or more modules or units corresponding to the foregoing functions.

The communication apparatus includes a processing unit, a sending unit, and a receiving unit. The processing unit is configured to obtain home public land mobile network HPLMN information of a terminal device. The communication apparatus is an access network device in a PLMN currently accessed by the terminal device, and the PLMN currently accessed by the terminal device is different from an HPLMN of the terminal device. The processing unit is further configured to control, based on the information about the HPLMN of the terminal device, the sending unit to send first information to the terminal device. The first information is related to the HPLMN of the terminal device, and the first information is used by the terminal device to perform measurement, HPLMN search, or reselection.

In a possible design, the first information indicates to start to search for the HPLMN of the terminal device.

In a possible design, the first information includes a cell selection policy. The cell selection policy is further related to the PLMN currently accessed by the terminal device, and measurement configuration information is used by the terminal device to perform reselection.

In a possible design, the cell selection policy indicates that a first priority is higher than a second priority. The first priority is a reselection priority of a first cell in the HPLMN of the terminal device, and the second priority is a reselection priority of a second cell in the PLMN currently accessed by the terminal device.

In a possible design, the first information includes measurement configuration information. The measurement configuration information includes information about a frequency in the HPLMN of the terminal device and information about measurement gap duration of the frequency. The measurement configuration information is used by the terminal device to perform measurement.

In a possible design, the frequency in the HPLMN of the terminal device includes at least one of the following: a frequency of a first communication standard in the HPLMN of the terminal device, or a frequency of a second communication standard in the HPLMN of the terminal device. The first communication standard is different from the second communication standard.

In a possible design, that the processing unit is configured to obtain home public land mobile network HPLMN information of a terminal device includes: The processing unit controls the receiving unit to receive a first message from a first core network device. The first core network device is a core network device in the PLMN currently accessed by the terminal device, and the first message includes the information about the HPLMN of the terminal device.

In a possible design, the first message includes an initial context setup request message.

In a possible design, that the processing unit is configured to obtain home public land mobile network HPLMN information of a terminal device includes: The receiving unit is configured to receive second information from the terminal device. The second information includes information about the PLMN currently accessed by the terminal device, and there is a correspondence between the PLMN currently accessed by the terminal device and the HPLMN of the terminal device. The processing unit is configured to determine the information about the HPLMN of the terminal device based on the second information and the correspondence.

In a possible design, that the processing unit is configured to obtain home public land mobile network HPLMN information of a terminal device includes: The processing unit is configured to control the receiving unit to receive a third message from the terminal device. The third message includes the information about the HPLMN of the terminal device.

In a possible design, the sending unit is further configured to send a fourth message to a second access network device. The fourth message includes the information about the HPLMN of the terminal device. The communication apparatus is an access network device before the terminal device is handed over, and the second access network device is an access network device after the terminal device is handed over. The second access network device and the communication apparatus belong to a same PLMN. The fourth message is used by the second access network device to send the second information based on the information about the HPLMN of the terminal device, the second information is related to the HPLMN of the terminal device, and the second information is used by the terminal device to perform measurement, HPLMN search, or reselection.

In a possible design, the sending unit is further configured to send a handover required message to the first core network device. The communication apparatus is an access network device before the terminal device is handed over, and the first core network device is a core network device in the PLMN currently accessed by the terminal device. The handover required message is used by the first core network device to send the information about the HPLMN of the terminal device to the second access network device based on the handover required message. The second access network device is an access network device after the terminal device is handed over. The information about the HPLMN of the terminal device is used by the second access network device to send the second information based on the information about the HPLMN of the terminal device, the second information is related to the HPLMN of the terminal device, and the second information is used by the terminal device to perform measurement, HPLMN search, or reselection.

In a possible design, the handover required message includes the information about the HPLMN of the terminal device.

In a possible design, the receiving unit is further configured to receive a measurement report from the terminal device. The measurement report is determined based on the measurement configuration information. The sending unit is further configured to send the first message to the terminal device. The first message indicates a target cell for handover or redirection. The target cell is determined based on the measurement report and priority information. The target cell belongs to a cell in the HPLMN of the terminal device. The priority information indicates that a third priority is higher than a fourth priority. Both the third priority and the fourth priority are handover priorities or redirection priorities. The third priority is a priority of the cell in the HPLMN of the terminal device, and the fourth priority is a priority of a cell in the PLMN currently accessed by the terminal device.

According to a fourth aspect, this application provides a communication apparatus. The communication apparatus may be the terminal device in the second aspect or any possible design of the second aspect, or a chip that implements functions of the terminal device. The communication apparatus includes a corresponding module, unit, or means (means) for implementing the foregoing method. The module, unit, or means may be implemented by hardware, implemented by software, or implemented by hardware by executing corresponding software. The hardware or the software includes one or more modules or units corresponding to the foregoing functions.

The communication apparatus includes a processing unit, a sending unit, and a receiving unit. The receiving unit is configured to receive first information from an access network device in a first public land mobile network PLMN. The first PLMN is a PLMN currently accessed by the communication apparatus, the first information is used by the communication apparatus to determine to search for a second PLMN, and the first PLMN is different from the second PLMN. The processing unit is configured to search for the second PLMN for camping based on the first information.

In a possible design, the first PLMN includes an HPLMN of the communication apparatus, and the second PLMN includes an equivalent public land mobile network EPLMN of the communication apparatus.

In a possible design, the receiving unit is configured to receive second information from a core network device in the first PLMN. The second information includes information about an area covered by the second PLMN. That the processing unit is configured to search for the second PLMN for camping based on the first information includes: determining, based on a location area in which the access network device is located and the second information, that the communication apparatus is in an area indicated by the second information; and when the communication apparatus is in the area indicated by the second information, searching for the second PLMN for camping. The first information includes information about the location area in which the access network device is located.

In a possible design, the area in the second information includes at least one of the following: an overlapping area, a boundary area, or a first area. The overlapping area is an area in which a service area of the core network device overlaps the area covered by the second PLMN. The boundary area is an area, in the overlapping area, whose distance from a boundary of the overlapping area is less than a first threshold. The first area is an area, in the boundary area, whose distance from the communication apparatus is less than a second threshold.

In a possible design, the terminal device is located within the boundary area, or the terminal device is located outside the boundary area.

In a possible design, the second information is transmitted by the terminal device by using an attach accept message or a tracking area update TAU accept message.

In a possible design, the second information is transmitted by using a user equipment configuration update message.

In a possible design, the first PLMN includes the EPLMN of the communication apparatus, and the second PLMN includes the HPLMN of the communication apparatus.

In a possible design, the receiving unit is configured to receive second information from the core network device in the first PLMN. The second information indicates at least a partial coverage area of the first PLMN, and the partial coverage area of the first PLMN belongs to a boundary area of the first PLMN. That the processing unit is configured to search for the second PLMN for camping based on the first information includes: determining, based on the location area in which the access network device is located and the second information, that the communication apparatus is in the area indicated by the second information; and when the communication apparatus is in the area indicated by the second information, searching for the second PLMN for camping. The first information includes information about the location area in which the access network device is located.

In a possible design, the partial coverage area of the first PLMN includes at least one of the following: an overlapping area or a first area. The overlapping area is an area in which the service area of the core network device overlaps the boundary area of the first PLMN, and the first area is an area, in the overlapping area, whose distance from the communication apparatus is less than the second threshold.

In a possible design, the second information is transmitted by using a registration accept message.

In a possible design, that the processing unit is configured to search for the second PLMN for camping based on the first information includes: searching for the second PLMN for camping based on second PLMN information. The first information includes the second PLMN information.

In a possible design, the receiving unit is configured to receive the first information from the access network device by using a system message.

In a possible design, the system message carries the first information by using a system information block SIB, and the SIB includes at least one of the following: a first SIB, a second SIB, or a third SIB.

The first SIB is a SIB used to carry intra-frequency information, the intra-frequency information includes information about a frequency in the second PLMN, and the frequency in the intra-frequency information is the same as a frequency of a cell on which the communication apparatus currently camps. For example, the first SIB may be a SIB 3 specified in the related 3GPP technical specification.

The second SIB is a SIB used to carry inter-frequency information, the inter-frequency information includes information about a frequency in the second PLMN, and the frequency in the inter-frequency information is different from a frequency of a cell on which the communication apparatus currently camps. For example, the second SIB may be a SIB 4 specified in the related 3GPP technical specification.

The third SIB is a SIB used to carry inter-system information, the inter-system information includes information about a communication standard of the second PLMN, and the communication standard in the inter-system information is different from a communication standard of the cell on which the communication apparatus currently camps. For example, the third SIB may be a SIB 5 specified in the related 3GPP technical specification.

According to a fifth aspect, an embodiment of this application provides a communication apparatus, including a processor and a memory. The memory is configured to store computer instructions, and when the processor executes the instructions, the communication apparatus is enabled to perform the method performed by the first access network device in any one of the foregoing aspects or any possible design of any one of the foregoing aspects. The communication apparatus may be the first access network device in the first aspect or any possible design of the first aspect, or a chip that implements functions of the first access network device.

According to a sixth aspect, an embodiment of this application provides a communication apparatus, including a processor. The processor is coupled to a memory, and is configured to read and execute instructions in the memory, so that the communication apparatus performs the method performed by the first access network device in any one of the foregoing aspects or any possible design of any one of the foregoing aspects. The communication apparatus may be the first access network device in the first aspect or any possible design of the first aspect, or a chip that implements functions of the first access network device.

According to a seventh aspect, an embodiment of this application provides a chip, including a processing circuit and an input/output interface. The input/output interface is configured to communicate with a module outside the chip. For example, the chip may be a chip that implements functions of the first access network device in the first aspect or any possible design of the first aspect. The processing circuit is configured to run a computer program or instructions, to implement the method according to the first aspect or any possible design of the first aspect.

According to an eighth aspect, an embodiment of this application provides a communication apparatus, including a processor and a memory. The memory is configured to store computer instructions, and when the processor executes the instructions, the communication apparatus is enabled to perform the method performed by the terminal device in any one of the foregoing aspects or any possible design of any one of the foregoing aspects. The communication apparatus may be the terminal device in the second aspect or any possible design of the second aspect, or a chip that implements functions of the terminal device.

According to a ninth aspect, an embodiment of this application provides a communication apparatus, including a processor. The processor is coupled to a memory, and is configured to read and execute instructions in the memory, so that the communication apparatus performs the method performed by the terminal device in any one of the foregoing aspects or any possible design of any one of the foregoing aspects. The communication apparatus may be the terminal device in the second aspect or any possible design of the second aspect, or a chip that implements functions of the terminal device.

According to a tenth aspect, an embodiment of this application provides a chip, including a processing circuit and an input/output interface. The input/output interface is configured to communicate with a module outside the chip. For example, the chip may be a chip that implements functions of the terminal device in the second aspect or any possible design of the second aspect. The processing circuit is configured to run a computer program or instructions, to implement the method according to the second aspect or any possible design of the second aspect.

According to an eleventh aspect, an embodiment of this application provides a computer-readable storage medium. The computer-readable storage medium stores instructions, and when the instructions are run on a computer, the computer is enabled to perform the method according to any one of the foregoing aspects.

According to a twelfth aspect, an embodiment of this application provides a computer program product including instructions. When the computer program product runs on a computer, the computer is enabled to perform the method according to any one of the foregoing aspects.

According to a thirteenth aspect, an embodiment of this application provides a circuit system. The circuit system includes a processing circuit, and the processing circuit is configured to perform the method according to any one of the foregoing aspects.

For technical effect brought by any design in the third aspect to the thirteenth aspect, refer to beneficial effect in the corresponding method provided above. Details are not described herein again.

### BRIEF DESCRIPTION OF DRAWINGS

FIG. 1 is a schematic diagram of an architecture of a communication system to which an embodiment of this application is applied;
FIG. 2 is a schematic diagram of an architecture of another communication system to which an embodiment of this application is applied;
FIG. 3 is a schematic diagram of an architecture of still another communication system to which an embodiment of this application is applied;
FIG. 4 is a schematic diagram of an architecture of still another communication system to which an embodiment of this application is applied;
FIG. 5 is a schematic diagram of an architecture of still another communication system to which an embodiment of this application is applied;
FIG. 6a is a schematic diagram of a network coverage scenario according to an embodiment of this application;
FIG. 6b is a schematic diagram of another network coverage scenario according to an embodiment of this application;
FIG. 6c is a schematic diagram of still another network coverage scenario according to an embodiment of this application;
FIG. 7 is a schematic flowchart of a communication method according to an embodiment of this application;
FIG. 8 is a schematic flowchart of another communication method according to an embodiment of this application;
FIG. 9 is a schematic flowchart of still another communication method according to an embodiment of this application;
FIG. 10 is a schematic flowchart of still another communication method according to an embodiment of this application;
FIG. 11a is a schematic flowchart of still another communication method according to an embodiment of this application;
FIG. 11b is a schematic flowchart of still another communication method according to an embodiment of this application;
FIG. 12 is a schematic flowchart of still another communication method according to an embodiment of this application;
FIG. 13 is a schematic flowchart of still another communication method according to an embodiment of this application;
FIG. 14a is a schematic flowchart of still another communication method according to an embodiment of this application;
FIG. 14b is a schematic flowchart of still another communication method according to an embodiment of this application;
FIG. 14c is a schematic flowchart of still another communication method according to an embodiment of this application;
FIG. 14d is a schematic flowchart of still another communication method according to an embodiment of this application;
FIG. 14e is a schematic diagram of still another network coverage scenario according to an embodiment of this application;
FIG. 15 is a schematic flowchart of still another communication method according to an embodiment of this application;
FIG. 16 is a schematic diagram of still another network coverage scenario according to an embodiment of this application;
FIG. 17 is a schematic flowchart of still another communication method according to an embodiment of this application;
FIG. 18 is a schematic flowchart of still another communication method according to an embodiment of this application;
FIG. 19 is a schematic flowchart of still another communication method according to an embodiment of this application;
FIG. 20 is a schematic diagram of a layered communication protocol according to an embodiment of this application;
FIG. 21 is a schematic flowchart of still another communication method according to an embodiment of this application;
FIG. 22 is a schematic diagram of a structure of a communication apparatus according to an embodiment of this application; and
FIG. 23 is a schematic diagram of a structure of another communication apparatus according to an embodiment of this application.

### DESCRIPTION OF EMBODIMENTS

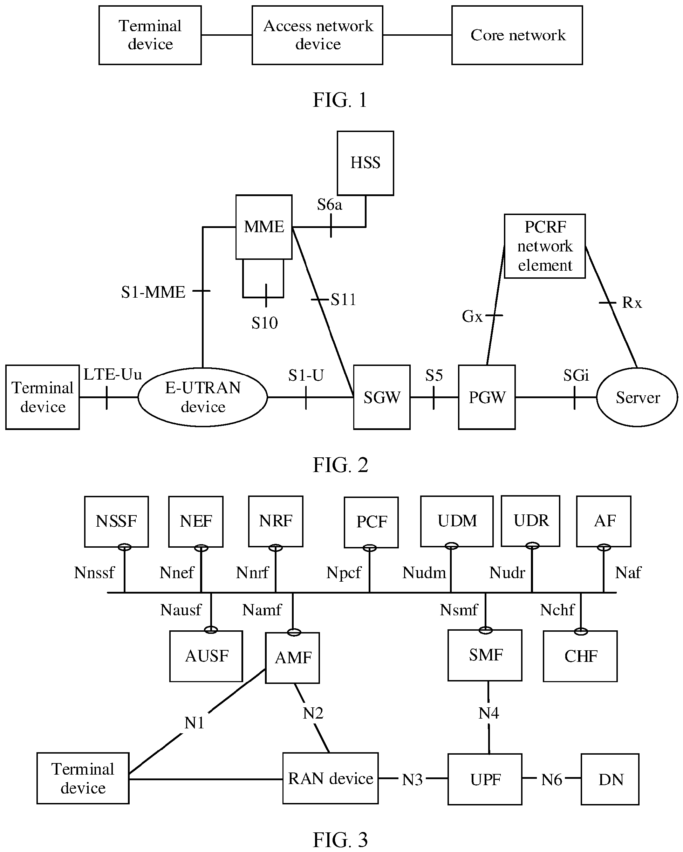

FIG. 1 is a schematic diagram of an architecture of a communication system according to an embodiment of this application. As shown in FIG. 1, the communication system includes a terminal device, an access network device, and a core network.

The terminal device includes a device that provides a voice and/or data connectivity for a user. Specifically, the terminal device includes a device that provides a voice for the user, includes a device that provides data connectivity for the user, or includes a device that provides a voice and data connectivity for the user. For example, a handheld device with a wireless connection function or a processing device connected to a wireless modem may be included. The terminal device may communicate with the core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, handheld, or computer built-in mobile apparatus. For example, the terminal device may include a device, for example, a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device may include information sensing devices such as a bar code, radio frequency identification (radio frequency identification, RFID), a sensor, a global positioning system (global positioning system, GPS), and a laser scanner.

If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU).

In embodiments of this application, the terminal device may further include a relay (relay). Alternatively, it may be understood that all devices that can perform data communication with a base station may be considered as terminal devices.

In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. In technical solutions provided in embodiments of this application, descriptions are provided by using an example in which the apparatus configured to implement the function of the terminal is the terminal device.

The access network device may be an access point for wireless communication or wired communication, for example, a base station or a base station controller, a wireless-fidelity (wireless-fidelity, Wi-Fi) access point or a Wi-Fi controller, or an access point for fixed network access. The base station may include various types of base stations such as a micro base station (also referred to as a small cell), a macro base station, a relay station, and an access point. This is not specifically limited in embodiments of this application. In embodiments of this application, the base station may be a base transceiver station (base transceiver station, BTS) in a global system for mobile communication (global system for mobile communication, GSM) or code division multiple access (code division multiple access, CDMA), a nodeB (nodeB) in wideband code division multiple access (wideband code division multiple access, WCDMA), an evolved nodeB (evolved nodeB, eNB, or e-NodeB) in long term evolution (long term evolution, LTE), an eNB in an internet of things (internet of things, IoT) or a narrowband internet of things (narrowband internet of things, NB-IoT), or a base station in the fifth generation (the fifth generation, 5G) mobile communication network or a future evolved public land mobile network (public land mobile network, PLMN). This is not limited in embodiments of this application.

The core network includes various core network devices such as an access management network element and a session management network element. The access management network element is mainly used for mobility management, access management, and the like, and may be configured to implement functions such as lawful interception and access authorization/authentication, other than session management in functions of a mobility management entity (mobility management entity, MME). In a 5G communication system, the access management network element may include an access and mobility management function (access and mobility management function, AMF) network element. The session management network element is mainly used for session management, internet protocol (internet protocol, IP) address assignment and management of the terminal devices, selection and control of user plane function, termination of interfaces towards policy control and charging functions, downlink data notification, and the like. In the fifth generation (the fifth generation, 5G) communication system, the session management network element may include a session management function (session management function, SMF) network element. For the MME, refer to descriptions in FIG. 2. For the AMF network element and the SMF network element, refer to descriptions in FIG. 3. It should be understood that the core network device may alternatively include another network element, for example, a user plane function (user plane function, UPF) network element or a session management function (session management function, SMF) network element. Details are not described herein again.

For example, FIG. 2 is a schematic diagram of an architecture of the fourth generation (the fourth generation, 4G) communication system. The 4G communication system includes an evolved universal mobile telecommunications system (universal mobile telecommunications system, UMTS) terrestrial radio access network (evolved UMTS territorial radio access network, E-UTRAN) device, an MME, a serving gateway (serving gateway, SGW), a packet data network (packet data network, PDN) gateway (PDN gateway, PGW), a policy and charging rules function (policy and charging rules function, PCRF) network element, a home subscriber server (home subscriber server, HSS), and another network element or device.

The terminal device accesses the E-UTRAN device through an LTE-Uu interface, the E-UTRAN device communicates with the MME through an S1-MME interface, the E-UTRAN device communicates with the SGW through an S 1-U interface, and different MMEs communicate with each other through an S10 interface (only one MME is provided as an example in FIG. 2). The MME communicates with the HSS through an S6a interface, the MME communicates with the SGW through an S11 interface, and the PGW communicates with the PCRF network element through a Gx interface. The PCRF network element communicates with a server through an Rx interface, the SGW communicates with the PGW through an S5 interface, and the PGW accesses the server through an SGi interface.

The E-UTRAN device is configured to implement all wireless-related functions of an evolved network. The MME is responsible for mobility management on a control plane, including managing the user context and mobility status and assigning temporary user identities. The SGW is a user plane anchor between 3rd generation partnership project (3rd generation partnership project, 3GPP) access networks, and is an interface for terminating an E-TURAN. The PGW is a user plane anchor between the 3GPP access network and a non-3GPP access network, and is an interface for terminating an external PDN. The PCRF network element includes a policy control function and a flow-based charging control function. The HSS is configured to store user subscription information. The server is configured to provide an internet protocol (internet protocol, IP) service, for example, a voice/video service based on an internet protocol multimedia subsystem (internet protocol multimedia subsystem, IMS), a packet switched streaming service (packet switched streaming service, PSS), or the like.

For example, FIG. 3 is a schematic diagram of an architecture of a 5G communication system. The 5G communication system includes a radio access network (radio access network, RAN) device, a user plane function (user plane function, UPF) network element, an AMF network element, an SMF network element, an authentication server function (authentication server function, AUSF) network element, a network slice selection function (network slice selection function, NSSF) network element, a network exposure function (network exposure function, NEF) network element, a network exposure function repository function (network exposure function repository function, NRF) network element, a policy control function (policy control function, PCF) network element, a unified data management (unified data management, UDM) network element, a unified data repository (unified data repository, UDR) network element, an application function (application function, AF) network element, a charging function (charging function, CHF) network element, or the like.

It should be noted that FIG. 3 is merely an example of some network elements or entities in the 5G communication system. The 5G communication system may further include some network elements or entities like a network data analytics function (network data analytics function, NWDAF) network element that are not shown in FIG. 3. This is not specifically limited in embodiments of this application.

As shown in FIG. 3, a terminal device accesses a 5G network by using a RAN device, and the terminal device communicates with the AMF through an N1 interface (N1 for short). The RAN device communicates with the AMF network element through an N2 interface (N2 for short). The RAN device communicates with the UPF network element through an N3 interface (N3 for short). The SMF network element communicates with the UPF network element through an N4 interface (N4 for short), and the UPF network element accesses a data network (data network, DN) through an N6 interface (N6 for short). In the architecture shown in FIG. 3, N1, N2, N3, N4, and N6 represent reference points (reference points) between related network elements/network functions.

In addition, control plane functions such as the AUSF network element, the AMF network element, the SMF network element, the NSSF network element, the NEF network element, the NRF network element, the PCF network element, the UDM network element, the UDR network element, the CHF network element, or the AF network element shown in FIG. 3 interact with each other through a service-oriented interface. For example, an external service-oriented interface provided by the AUSF network element is Nausf. An external service-oriented interface provided by the AMF network element is Namf. An external service-oriented interface provided by the SMF network element is Nsmf. An external service-oriented interface provided by the NSSF network element is Nnssf. An external service-oriented interface provided by the NEF network element is Nnef. An external service-oriented interface provided by the NRF network element is Nnrf. An external service-oriented interface provided by the PCF network element is Npcf. An external service-oriented interface provided by the UDM network element is Nudm. An external service-oriented interface provided by the UDR network element is Nudr. An external service-oriented interface provided by the CHF network element is Nchf. An external service-oriented interface provided by the AF network element is Naf. For related function descriptions and interface descriptions, refer to a diagram of a 5G system architecture (5G system architecture) in the 23501 standard. Details are not described herein.

It should be understood that names of the core network devices such as the MME, the SMF, and the AMF, are merely names, and constitute no limitation on the devices. It may be understood that in the 5G network and another future network, another name may be used. This is not specifically limited in embodiments of this application. For example, the AMF network element may also be referred to as an AMF or an AMF entity. A unified description is provided herein, and details are not described below.

Optionally, the core network device may be implemented by one device, or may be jointly implemented by a plurality of devices, or may be a function module in one device. This is not specifically limited in embodiments of this application. It may be understood that the function module may be a network element in a hardware device, or may be a software function module running on dedicated hardware, or may be a virtual function module instantiated on a platform (for example, a cloud platform).

For ease of understanding embodiments of this application, the following first briefly describes terms in embodiments of this application. It should be understood that these descriptions are merely for ease of understanding of embodiments of this application, and shall not constitute any limitation on this application.

### 1. Communication standard

The communication standard includes but is not limited to a 2nd-generation wireless telephone technology (2nd-generation wireless telephone technology, 2G) network, a 3rd-generation wireless telephone technology (3rd-generation wireless telephone technology, 3G) network, a 4th-generation wireless telephone technology (4th-generation wireless telephone technology, 4G) network, a 5th-generation wireless telephone technology (5th-generation wireless telephone technology, 5G) network, and the like, for example, a global system for mobile communication (global system for mobile communication, GSM) network, a code division multiple access (code division multiple access, CDMA) network, a wideband code division multiple access (wideband code division multiple access, WCDMA) network, a universal mobile telecommunications system (universal mobile telecommunications system, UMTS) network, and a long-term evolution (long-term evolution, LTE) network.

### 2. PLMN

The PLMN is a network that is built and operated by a government or an operator authorized by the government and that provides a land mobile telecommunication service for the public. The PLMN is interconnected with a public switched telephone network to form a regional or national communication network.

The PLMN includes a mobile country code (mobile country code, MCC) and a mobile network code (mobile network code, MNC). The MCC uniquely indicates a country to which a mobile subscriber belongs. For example, an MCC of China is 460. The MNC uniquely indicates a network in a country. For example, an MNC corresponding to China Mobile may include 00, and an MNC corresponding to China Unicorn may include 01. Different network operators may correspond to different PLMNs. For example, a PLMN of China Mobile may include 46000, 46002, 46004, 46007, and 46008. A PLMN of China Unicorn may include 46001, 46006, 46009, and 46010. A PLMN of China Telecom may include 46003, 46011, and 46012. A PLMN of China Broadcasting and Television may include 46015. In the future, PLMNs corresponding to network operators may further include other PLMNs. This is not limited in embodiments of this application.

A terminal device usually needs to maintain at least one type of PLMN. PLMN types are described as follows:

A home public land mobile network (home PLMN, HPLMN) is a PLMN corresponding to an international mobile subscriber identity (international mobile subscriber identity, IMSI) in a universal subscriber identity module (universal subscriber identity module, USIM) of the terminal device. For a specific terminal device, the terminal device has one HPLMN. China Mobile is used as an example. For a terminal device whose home network operator is China Mobile, an HPLMN includes a PLMN identified by 46000. China Unicorn is used as an example. For a terminal device whose home network operator is China Unicom, an HPLMN includes a PLMN identified by 46001. The HPLMN may also be described as a home network. In embodiments of this application, the HPLMN and the home network refer to a same meaning and may be interchanged.

A visited public land mobile network (visited PLMN, VPLMN) is a PLMN visited by the terminal device. For a specific terminal device, the VPLMN is different from the HPLMN of the terminal device. The MCC and the MNC in the VPLMN are different from the MCC and the MNC in the IMSI. The VPLMN may also be described as a visited network. In embodiments of this application, the VPLMN and the visited network refer to a same meaning and may be interchanged.

An equivalent public land mobile network (equivalent PLMN, EPLMN) is a PLMN that is equivalent to the HPLMN of the terminal device, and has a same priority as the HPLMN. For a specific terminal device, the terminal device has one or more EPLMNs. In a possible case, a network corresponding to the EPLMN is usually another PLMN of the home network operator. For example, China Mobile is used as an example. For a terminal device whose home network operator is China Mobile, the EPLMN may include a PLMN identified by 46002, 46004, 46007, or 46008. China Unicorn is used as an example. For a terminal device whose home network operator is China Unicom, the EPLMN may include a PLMN identified by 46006, 46009, or 46010.

In another possible case, the network corresponding to the EPLMN may alternatively include a PLMN of a network operator other than the home network operator. It may be understood that a PLMN shared by another network operator is a PLMN that another network operator allows the terminal device to access. For example, China Mobile is used as an example. China Mobile provides a PLMN for sharing a service for China Unicom, for example, an EPLMN identified by 46030. China Mobile provides a PLMN for sharing a service for China Telecom, for example, an EPLMN identified by 46031. In embodiments of this application, only a shared EPLMN is used as an example for description.

For the terminal device, if the terminal device is in a home area, the terminal device selects an HPLMN as the PLMN for access, or selects an EPLMN of a home network operator as the PLMN for access. If the terminal device is located in a coverage area of the shared EPLMN, the terminal device may select an EPLMN shared by another network operator for access. The selected EPLMN may be described as a VPLMN.

### 3. Inter-network roaming

Inter-network roaming means that a terminal device obtains a network service in a home network country by accessing a PLMN of another network operator. For example, a user of a terminal device of China Unicorn accesses a network of China Mobile in China to obtain a network service. After accessing the visited network, the terminal device may use a service provided by the home network or a service provided by the access network. Access networks and core networks of inter-network roaming operators are independently constructed and managed, and mobile subscribers are independently managed. Operators that provide inter-network roaming services provide corresponding services for roaming terminal devices according to inter-network roaming agreements. Inter-network roaming may be implemented in a home routing mode. To be specific, roaming subscriber data is returned to the home network, and services are provided by the home network to the terminal device. Alternatively, the service provided by the access network can be directly used.

For inter-network roaming, a core network device of the home network sends shared PLMN information, for example, a PLMN ID, of the visited network to the terminal device in a form of EPLMN information. When the terminal device is located in a coverage area of the visited network, the terminal device may access the EPLMN based on the EPLMN information.

For example, in a 5G standalone (standalone, SA) scenario, the terminal device is in a specific area. Because the area is not covered by an HPLMN network (for example, not covered by any network, including the 2G/3G/4G/5G network), or the area is covered by only an HPLMN network of a low communication standard (for example, only covered by 2G/3G/4G without 5G, or only covered by 2G/3G without 4G/5G), the terminal device cannot access the HPLMN to obtain 5G services. In this scenario, the terminal may access a shared EPLMN (the EPLMN can provide the 5G services) provided by another network operator, to obtain the 5G services such as a 5G data service, IMS-based voice/video service VONR, and a short message service. In this case, inter-network roaming may also be described as 5G core network inter-network roaming or 5G core network roaming. In embodiments of this application, only the 5G core network inter-network roaming is used as an example for description.

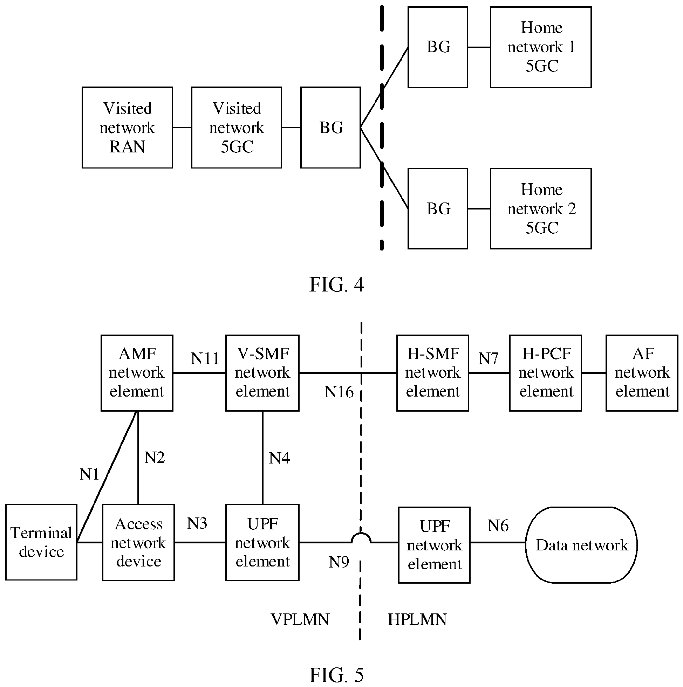

FIG. 4 is a diagram of a network architecture of 5G core network inter-network roaming. The visited network and the home network are connected by using a border gateway (border gateway, BG). The 5G core network inter-network roaming supports roaming services provided for a plurality of network operators. Terminal devices of different network operators may be connected to respective home 5G core networks by accessing a 5G network of a visited network. In FIG. 4, only two home networks are used as examples for description. Specifically, a terminal device of a home network 1 is connected to a 5G core network of a home network 1 by accessing a 5G network of a visited network. A terminal device of a home network 2 is connected to a 5G core network of a home network 2 by accessing a 5G network of a visited network.

FIG. 5 is a diagram of a network architecture of still another 5G core network inter-network roaming. A PLMN of the visited network is recorded as a VPLMN. An SMF network element in the VPLMN is referred to as a visited-SMF (visited-SMF, V-SMF) network element. An AMF network element in the VPLMN is referred to as a visited-AMF (visited-AMF, V-AMF) network element. A PLMN of the home network is recorded as an HPLMN. An SMF network element in the HPLMN is referred to as a home-SMF (home-SMF, H-SMF) network element. A PCF network element in the HPLMN is referred to as a home-PCF (home-PCF, H-PCF) network element.

### 4. Shared network and shared area

The shared network is a network that allows or is dedicated for a terminal device of another network operator (network operator other than the home network operator) to access. For example, China Mobile is used as an example. China Mobile provides a PLMN for sharing a service for China Unicom, for example, an EPLMN identified by 46030. The EPLMN identified by 46030 may be a PLMN dedicated to providing a shared service for China Unicom. China Mobile provides a PLMN for sharing a service for China Telecom, for example, an EPLMN identified by 46031. The EPLMN identified by 46031 may be a PLMN dedicated to providing a shared service for China Telecom.

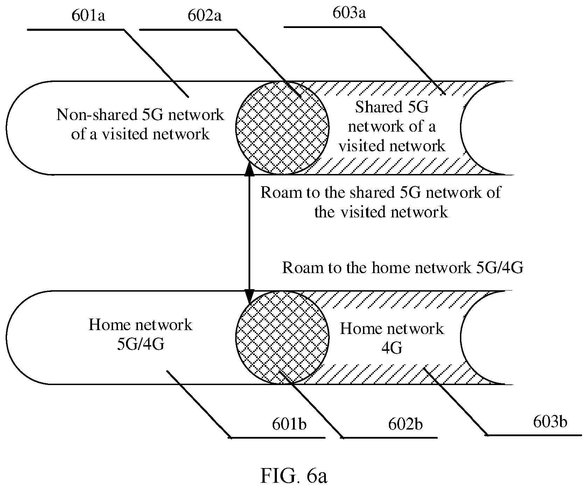

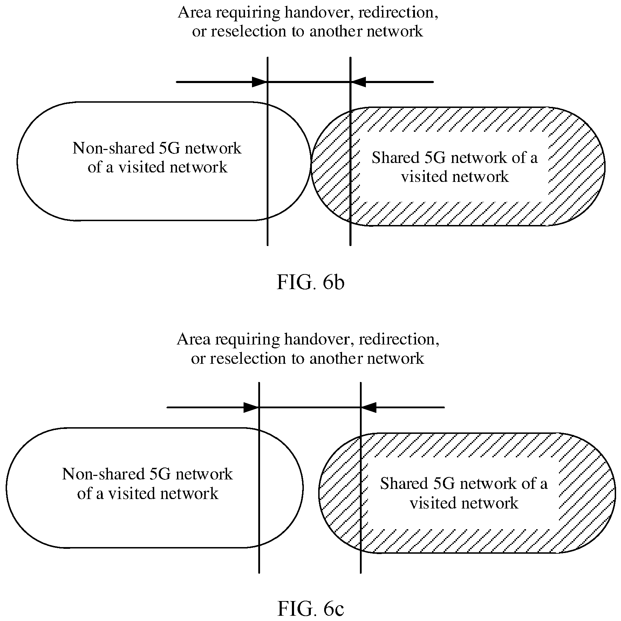

A coverage area of the shared network may be described as the shared area. For example, the shared network may be a 5G network, or may be a network of another communication standard. In this embodiment of this application, only the 5G network is used as an example for description. Correspondingly, an area covered by a shared 5G network may be described as a shared 5G area, as shown by an area filled with oblique lines in FIG. 6a (or FIG. 6b, or FIG. 6c).

For example, China Mobile is used as an example. In an identifier of the shared 5G network provided by China Mobile for another network operator, a value of the MCC is 460, and a value of the MNC is 30.

### 5. Non-shared network and non-shared area

The non-shared network is a network that does not allow access of a terminal device of another network operator other than a terminal device of a home network operator of the terminal device. A coverage area of the non-shared network may be described as a non-shared area. For example, the non-shared network may be a 5G network, or may be a network of another communication standard. In an embodiment of this application, the 5G network is used as an example for description. Correspondingly, the area covered by the non-shared 5G network may be described as a non-shared 5G area, as shown in an area not filled with oblique lines in FIG. 6a (or FIG. 6b or FIG. 6c).

For example, China Mobile is still used as an example. In an identifier of the non-shared 5G network used by China Mobile, a value of the MCC is 460, and a value of the MNC is 00; or a value of the MCC is 460, and a value of the MNC is 02.

It should be noted that, if the terminal device is in the non-shared area, the terminal device needs to access a home network of the terminal device.

FIG. 6a is used as an example. An area identified by a part not filled with oblique lines or grid lines indicates a same area that is covered by a non-shared 5G network of the visited network and that is covered by a home 4G network and/or a home 5G network. In this case, the terminal device in the area accesses the home network. An area identified by a part filled with oblique lines indicates a same area that is covered by both a shared 5G network of the visited network and the home 4G network. In this case, the terminal device in the area may access the visited network, to implement better data transmission performance. An area identified by a part filled with grid lines indicates a same area that is covered by both the shared 5G network of the visited network and the non-shared 5G network of the visited network. In this case, if the terminal device moves from the area filled with oblique lines to the blank area, the terminal device needs to be handed over, redirected, or reselected from the visited network to the home network, to normally perform service transmission. Conversely, if the terminal device moves from the blank area to the area filled with oblique lines, the terminal device needs to be handed over, redirected, or reselected from the home network to the visited network, to normally perform service transmission.

It should be noted that, in FIG. 6a, an area indicated by 601a represents an area covered by the non-shared 5G network of the visited network. An area indicated by 602a represents an area covered by both the non-shared 5G network of the visited network and the shared 5G network of the visited network. An area indicated by 603a represents an area covered by the shared 5G network of the visited network. An area indicated by 601b represents an area covered by the home 5G network and/or the home 4G network. An area indicated by 602b represents an area covered by both the home 5G network and the home 4G network. An area indicated by 603b represents an area covered by the home 4G network. In addition, in terms of an actual geographical location, 601a and 601b represent a same area, 602a and 602b represent a same area, and 603a and 603b represent a same area. For a blank elliptic area in FIG. 6b (or FIG. 6c), refer to descriptions of 601a and 601b. For an elliptic area filled with oblique lines in FIG. 6b (or FIG. 6c), refer to descriptions of 603a and 601b.

FIG. 6b or FIG. 6c is used as an example. The area identified by an elliptical area without oblique lines is an area covered by the non-shared 5G network of the visited network. The area identified by the elliptical area filled with oblique lines is an area covered by the shared 5G network of the visited network. In FIG. 6b, a coverage area of the non-shared 5G network is tangent to a coverage area of the shared 5G network. In FIG. 6b, the coverage area of the non-shared 5G network does not overlap or is not tangent to the coverage area of the shared 5G network, and the two coverage areas are close to each other. For example, a distance between the coverage area of the non-shared 5G network and the coverage area of the shared 5G network is less than a preset value. In FIG. 6b or FIG. 6c, if the terminal device moves from the area filled with oblique lines to the blank area, the terminal device needs to be handed over, redirected, or reselected from the shared 5G network of the visited network to the home network, to normally perform service transmission. Conversely, if the terminal device moves from the blank area to the area filled with oblique lines, the terminal device needs to be handed over, redirected, or reselected from the home network to the shared 5G network of the visited network, to normally perform service transmission.

### 6. Radio resource control (radio resource control, RRC) status

A 4G network supports two RRC states: an RRC idle state (RRC_IDLE) and an RRC connected state (RRC_CONNECTED). A 5G network supports three RRC states: an RRC idle state (RRC_IDLE), an RRC inactive state (RRC_INACTIVE), and an RRC connected state (RRC_CONNECTED). Switching may be performed among different RRC states.

When the terminal device is in the RRC connected state, the terminal device receives measurement configuration information from the access network device. The measurement configuration information includes information about a frequency, or includes information about a frequency and information, for example, a physical-layer cell identity (physical-layer cell identity, PCI), about a cell corresponding to the frequency. The frequency in the measurement configuration information belongs to a frequency in a PLMN currently accessed by the terminal device. The terminal device measures the frequency in the measurement configuration information, to obtain a measurement report (measurement report). The terminal device sends the measurement report to the access network device, and correspondingly, the access network device receives the measurement report from the terminal device. Then, the access network device determines a target cell based on the measurement report, so that the terminal device performs cell handover (handover) or redirection (redirection).

Cell handover means that the terminal device moves from one cell to another cell in a region, and the two cells may be cells of a same communication standard, for example, a 5G cell. Redirection means that a terminal device in a connected state first releases a connection, and then re-accesses the target cell. For the terminal device, a cell before redirection and a cell after redirection may have a same communication standard or different communication standards.

When the terminal device is in the RRC idle state, the terminal device receives a system message from the access network device. The system message includes intra-frequency information, inter-frequency information, and inter-system information. The intra-frequency information includes information about the frequency in the PLMN currently accessed by the terminal device, and the frequency is the same as a frequency in a cell on which the terminal device currently camps. The inter-frequency information includes information about the frequency in the PLMN currently accessed by the terminal device, and the frequency is different from the frequency in the cell on which the terminal device currently camps. The inter-system information includes information about a communication standard of the PLMN currently accessed by the terminal device, and the communication standard is different from a communication standard of the cell on which the terminal device currently camps. The terminal device in the idle state performs measurement based on the foregoing information (such as the intra-frequency information, the inter-frequency information, and the inter-system information), to obtain a measurement result. Then, the terminal device performs cell reselection based on the measurement result.

However, in some scenarios, the measurement configuration information and the system message are not configured with inter-network (PLMNs other than a PLMN accessed by the terminal device) measurement information. Therefore, the terminal device cannot perform handover, redirection, or reselection between the visited network and the home network. As a result, a service cannot be normally transmitted, and user experience is poor.

In view of this, embodiments of this application provide two communication methods. The communication method (a first communication method or a second communication method) in embodiments of this application may be applied to the communication system shown in FIG. 1. In embodiments of this application, for a network element in a VPLMN of the terminal device, for example, the access network device may be described as a first access network device, and the core network device may be described as a first core network device. For a network element in an HPLMN of the terminal device, for example, the access network device may be described as a third access network device, and the core network device may be described as a third core network device. For brevity of description, the HPLMN of the terminal device may also be referred to as an HPLMN for short. The EPLMN of the terminal device may also be referred to as an EPLMN for short, and the VPLMN of the terminal device may also be referred to as a VPLMN for short. In the following embodiments of this application, names of messages between network elements, names of parameters in messages, or the like are merely examples, and there may be other names during specific implementation. Unified descriptions are provided herein and details are not described below again.

### Embodiment 1

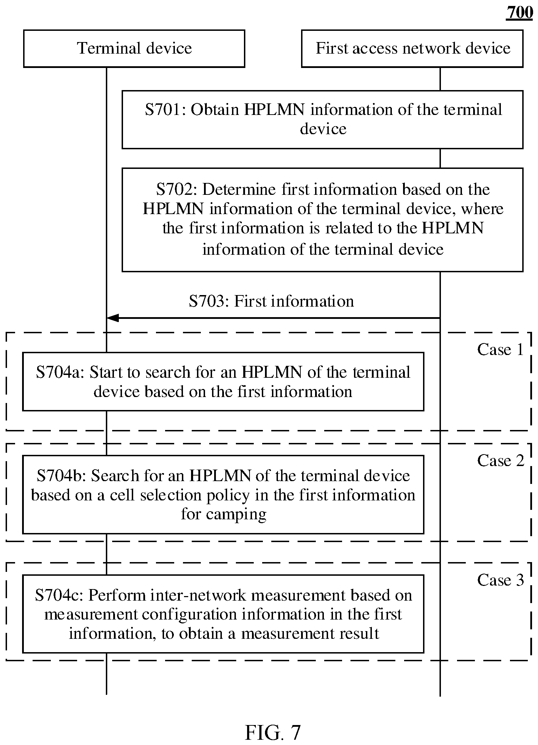

Embodiment 1 is described below with reference to FIG. 7 to FIG. 11. Embodiment 1 may be the first communication method provided in embodiments of this application.

In the first communication method provided in this embodiment of this application, a first access network device obtains information about a HPLMN of a terminal device. The first access network device is an access network device in a PLMN currently accessed by the terminal device, and the PLMN currently accessed by the terminal device is different from the HPLMN of the terminal device. Then, the first access network device sends first information to the terminal device based on the information about the HPLMN of the terminal device. The first information is related to the HPLMN of the terminal device, and the first information is used by the terminal device to perform measurement, HPLMN search, or reselection. In this way, when performing measurement based on the first information, the terminal device may perform inter-network measurement, to lay a basis for the terminal device to be handed over or redirected from the currently accessed PLMN to the HPLMN. When performing the HPLMN search based on the first information, the terminal device may find a frequency in the HPLMN. This lays a basis for generating an inter-network measurement report and for handover or redirection to the HPLMN. When the terminal device performs reselection based on the first information, because the first information is related to the HPLMN, the HPLMN can be reselected by the terminal device to make service transmission be performed normally. This helps improve user experience.

As shown in FIG. 7, a first communication method 700 according to an embodiment of this application includes the following steps.

S701: The first access network device obtains the information about the HPLMN of the terminal device.

The first access network device is an access network device in the PLMN currently accessed by the terminal device. The PLMN currently accessed by the terminal device is different from the HPLMN of the terminal device. In other words, the terminal device currently accesses the VPLMN but does not access the HPLMN, as shown in FIG. 5.

The information about the HPLMN of the terminal device indicates the HPLMN of the terminal device. For example, the information about the HPLMN may be an HPLMN ID. It should be understood that the information about the HPLMN may alternatively be implemented as information in another form, to indicate the HPLMN of the terminal device. In an embodiment of this application, the HPLMN ID is merely used as an example for description.

Optionally, an implementation process of S701 includes the following three manners (for example, Manner 1 to Manner 3).

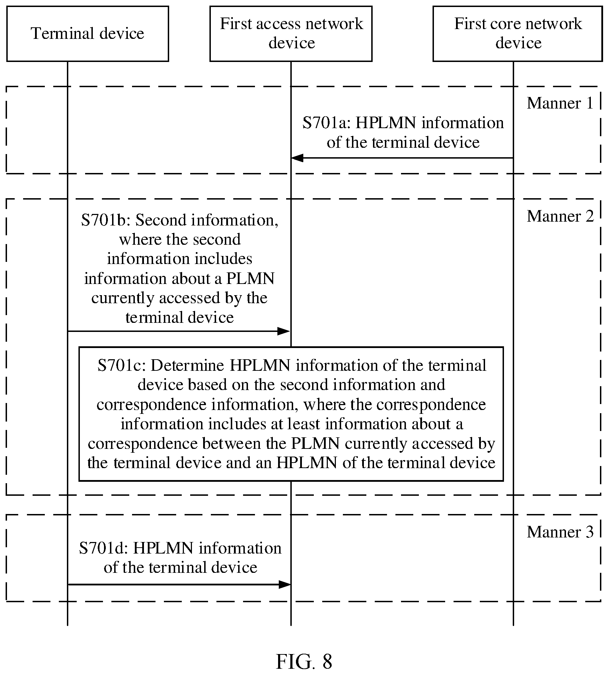

As shown in the block in which "Manner 1" is located in FIG. 8, S701 may be implemented as S701a.

S701a: A first core network device sends the information about the HPLMN of the terminal device to the first access network device. Correspondingly, the first access network device receives the information about the HPLMN of the terminal device from the first core network device.

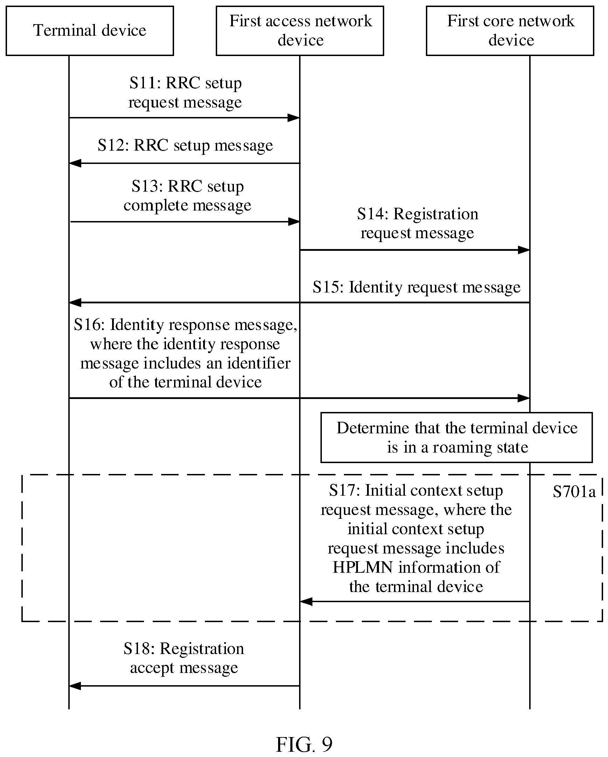

The first core network device is a core network device in the PLMN currently accessed by the terminal device. An initial registration process of the terminal device is used as an example. The first core network device is a core network device that receives a registration request (registration accept) sent by the terminal and provides a registration accept (registration accept) message for the terminal device. For example, a 5G network is used as an example. The first core network device may be implemented as an AMF network element. The following describes the process with reference to the process shown in FIG. 9.

A registration process of the terminal device in the VPLMN is used as an example. FIG. 9 shows a method flowchart of a possible registration process. Specific steps are as follows:

S 11: The terminal device sends an RRC setup request (RRC setup request) message to the first access network device. Correspondingly, the first access network device receives the RRC setup request message from the terminal device.

The RRC setup request message is used to request to set up an RRC connection. For example, the RRC setup request message includes at least one of the following: an identifier of the terminal device and a setup reason. The identifier of the terminal device may include a temporary mobile subscription identity (5G S-temporary mobile subscriber identity, 5G-S-TMSI). The setup reason includes but is not limited to at least one of the following: calling signaling, calling data, a calling voice call, a calling video call, a calling short message, an emergency call, and the like.

S12: The first access network device sends an RRC setup (RRC setup) message to the terminal device. Correspondingly, the terminal device receives the RRC setup message from the first access network device.

The RRC setup message is used to set up configuration of a radio signaling bearer.

S13: The terminal device sends an RRC setup complete (RRC setup complete) message to the first access network device. Correspondingly, the first access network device receives the RRC setup complete message from the terminal device.

The RRC setup complete message includes the registration request (registration request) message and information, for example, a PLMN ID, about a PLMN selected by the terminal device for access.

S14: The first access network device sends the registration request message to the first core network device. Correspondingly, the first core network device receives the registration request message from the first access network device.

For the first core network device, when the first core network device cannot determine the identifier of the terminal device, for example, a subscription concealed identifier (subscription concealed identifier, SUCI), the first core network device performs S15 and S16. Conversely, when the first core network device can determine the identifier of the terminal device, the first core network device performs S17. S15, S16, and S 17 are described as follows:

S15: The first core network device sends an identity request (identity request) message to the terminal device. Correspondingly, the terminal device receives the identity request message from the first core network device.

The identity request message is used to request the identifier of the terminal device.

S16: The terminal device sends an identity response (identity response) message to the first core network device. Correspondingly, the first core network device receives the identity response message from the terminal device.

The identity response message includes the identifier of the terminal device, for example, the SUCI.

S17: When the first core network device determines that the terminal device is in a roaming state, the first core network device sends an initial context setup request (initial context setup request) message to the first access network device. Correspondingly, the first access network device receives the initial context setup request message from the first core network device.

The initial context setup request message includes the information about the HPLMN of the terminal device and a registration accept (registration accept) message.

S18: The first access network device sends the registration accept message to the terminal device. Correspondingly, the terminal device receives the registration accept message from the first access network device.

Because the initial context setup request message in S 17 includes the information about the HPLMN of the terminal device, the first access network device may obtain the information about the HPLMN of the terminal device in the registration process, so that the first access network device determines whether to perform a differentiated mobility management policy.

As shown in the block in which "Manner 2" is located in FIG. 8, S701 may be implemented as S701b and S701c.

S701b: The terminal device sends second information to the first access network device. Correspondingly, the first access network device receives the second information from the terminal device.

The second information includes information, for example, a PLMN ID, about the PLMN currently accessed by the terminal device.

For example, China Mobile provides a shared service for another network operator, for example, China Unicom. In this case, the first access network device is a base station of China Mobile, and a PLMN ID broadcast by the first access network device includes 460, 30, where 460, 30 is an EPLMN shared by China Mobile to China Unicom. For a terminal device whose home network operator is China Unicom, the terminal device selects to access a PLMN identified by 460, 30. Correspondingly, the second information includes 460, 30.

For another example, China Mobile provides a shared service for two or more network operators such as China Unicorn and China Telecom. In this case, the first access network device is a base station of China Mobile, and PLMN IDs broadcast by the first access network device include 460, 30 and 460, 31, where 460, 30 is an EPLMN shared by China Mobile to China Unicom, and 460, 31 is an EPLMN shared by China Mobile to China Telecom. For a terminal device whose home network operator is China Unicom, the terminal device selects to access a PLMN identified by 460, 30. Correspondingly, the second information includes 460, 30. For a terminal device whose home network operator is China Telecom, the terminal device selects to access a PLMN identified by 460, 31. Correspondingly, the second information includes 460, 31.

S701c: The first access network device determines the information about the HPLMN of the terminal device based on the second information and correspondence information.

The correspondence information is described as follows:

The correspondence information includes at least information about a correspondence between the PLMN currently accessed by the terminal device and the HPLMN of the terminal device.

For example, China Mobile provides a shared service for another network operator, for example, China Unicom. The correspondence information may include information about a correspondence between 460, 01 and 460, 30, where 460, 01 is a PLMN that China Unicorn provides services for mobile users of China Unicom.

For another example, China Mobile provides shared services to two or more other network operators such as China Unicorn and China Telecom. The correspondence information may include information about a correspondence between 460, 01 and 460, 30 and information about a correspondence between 460, 03 and 460, 31, where 460, 01 is a PLMN that China Unicorn provides services for mobile users of China Unicom, and 460, 03 is a PLMN that China Telecom provides services for mobile users of China Telecom.

For example, for the first access network device, the correspondence information may be preconfigured, or may be information provided by the first core network device for the first access network device. This is not limited in embodiments of this application.

For example, an implementation process of S701c is as follows.

For example, China Mobile provides a shared service for another network operator, for example, China Unicom. The first access network device determines, based on 460, 30 (that is, the second information) and information about a correspondence (that is, the correspondence information) between 460, 01 and 460, 30, that the information about the HPLMN is 460, 01.

For another example, China Mobile provides shared services for two or more other network operators such as China Unicorn and China Telecom. For a terminal device whose home network operator is China Unicom, the first access network device determines, based on 460, 30 (that is, the second information) and information about a correspondence (that is, the correspondence information) between 460, 01 and 460, 30, that the information about the HPLMN is 460, 01. For a terminal device whose home network operator is China Telecom, the first access network device determines, based on 460, 31 (that is, the second information) and information about a correspondence (that is, the correspondence information) between 460, 03 and 460, 31, that the information about the HPLMN is 460, 03.

In this way, the first access network device may determine the information about the HPLMN of the terminal device based on the second information reported by the terminal device.

As shown in the block in which "Manner 3" is located in FIG. 8, S701 may be implemented as S701d.

S701d: The terminal device sends the information about the HPLMN to the first access network device. Correspondingly, the first access network device receives the information about the HPLMN from the terminal device.

The information about the HPLMN in S701d is the information about the HPLMN of the terminal device, for example, an HPLMN ID.

For example, China Mobile provides a shared service for another network operator. In this case, the first access network device is a base station of China Mobile. For a terminal device whose home network operator is China Unicom, the information about the HPLMN sent by the terminal device to the first access network device includes 460, 01. For a terminal device whose home network operator is China Telecom, the information about the HPLMN sent by the terminal device to the first access network device includes 460, 03.

In this way, the first access network device may obtain the information about the HPLMN from the terminal device.

Optionally, in some embodiments, the second information in S701b (or the information about the HPLMN in S701d) may be transmitted by using the following message:

For example, the second information in S701b (or the information about the HPLMN in S701d) may be carried in the RRC setup request message, and transmitted by using the RRC setup request message. For example, the terminal device sends the second information (or the information about the HPLMN) to the first access network device by using the RRC setup request message. Correspondingly, the first access network device receives the second information (or the information about the HPLMN) from the terminal device by using the RRC setup request message.

For another example, the second information in S701b (or the information about the HPLMN in S701d) may be carried in the RRC setup complete message, and transmitted by using the RRC setup complete message. For example, the terminal device sends the second information (or the information about the HPLMN) to the first access network device by using the RRC setup complete message. Correspondingly, the first access network device receives the second information (or the information about the HPLMN) from the terminal device by using the RRC setup complete message.

It should be understood that transmission of the second information in S701b (or the information about the HPLMN in S701d) is described only by using the RRC setup request message and the RRC setup complete message as an example. Certainly, the second information in S701b (or the information about the HPLMN in S701d) may be transmitted by using another message. This is not limited in this embodiment of this application.

It should be noted that, in the "Manner 3" in FIG. 8, the terminal device may further send, to the first access network device, the information about the PLMN selected by the terminal device for access. The information about the PLMN selected by the terminal device for access and the information about the HPLMN in S701d may be transmitted by using a same message, or may be transmitted by using different messages. This is not limited in this embodiment of this application.

S702: The first access network device determines the first information based on the information about the HPLMN of the terminal device.

The first information is related to the HPLMN of the terminal device. For example, the first information is described by using the following three examples (for example, Example 1 to Example 3).

Example 1: The first information includes measurement configuration information. The measurement configuration information includes information about a frequency in the HPLMN of the terminal device and information about measurement gap duration of the frequency.

The frequency in the HPLMN of the terminal device includes a frequency in at least one communication standard, for example, a frequency of a first communication standard and/or a frequency of a second communication standard in the HPLMN of the terminal device. The first communication standard is different from the second communication standard. For example, the first communication standard may be a 5G network, and the second communication standard may be a 4G network, a 3G network, or a 2G network. In this embodiment of this application, only an example in which the first communication standard is the 5G network and the second communication standard is the 4G network is used for description. In this case, the information about the frequency in the HPLMN of the terminal device may include at least one of the following: information about a frequency in an NR-HPLMN or information about a frequency in an EUTRA-HPLMN. The information about the frequency in the HPLMN of the terminal device may alternatively have another name, for example, described as a measurement object (MeasObject) identifier. This is not limited in this embodiment of this application.

The information about the measurement gap duration of the frequency may include at least one of the following: an NR-HPLMN measurement gap and an EUTRA-HPLMN measurement gap. For example, the measurement gap duration of the frequency may include at least one time unit. One time unit may be one or more symbols, one or more slots (slots), one or more mini-slots (mini-slots), one or more subframes, one or more frames, or the like. For definitions of the symbol, the mini-slot, the slot, the subframe, and the frame in embodiments of this application, refer to the related 3GPP technical specification. The information about the measurement gap duration of the frequency may alternatively have another name, for example, described as measurement gap configuration (MeasGapConfig). This is not limited in this embodiment of this application.

Example 2: The first information includes indication information. In a possible implementation, the indication information indicates to start to search for the HPLMN of the terminal device. For example, the indication information includes an HPLMN ID, to indicate a to-be-searched PLMN. In another possible implementation, the indication information indicates an HPLMN that is close to the terminal device. In this case, after the first access network device performs S701, the first access network device determines, based on an area location in which the first access network device is located and a coverage area of an HPLMN identified by the information about the HPLMN, a distance between the first access network device and the coverage area of the HPLMN. If the distance is less than a preset value, it is considered that the HPLMN is close to the terminal device. Correspondingly, the first access network device generates the indication information.

Example 3: The first information includes a cell selection policy. The cell selection policy is further related to the PLMN currently accessed by the terminal device. For example, the cell selection policy indicates that a reselection priority of a first cell in the HPLMN of the terminal device is higher than a reselection priority of a second cell in the PLMN currently accessed by the terminal device.

A communication standard of the first cell and a communication standard of the second cell may be the same or different. This is not limited in this embodiment of this application.

It should be understood that the cell selection policy may alternatively have another name, for example, a radio/frequency selection policy (radio/frequency selection policy, RFSP). In this embodiment of this application, the cell selection policy is merely used as an example for description.

It should be noted that, in another scenario, the cell selection policy may further indicate at least one of the following:

First: The reselection priority of the first cell in the HPLMN of the terminal device is lower than the reselection priority of the second cell in the PLMN currently accessed by the terminal device.

Second: Reselection priorities are the same. It may be understood that the reselection priority of the first cell in the HPLMN of the terminal device is the same as the reselection priority of the second cell in the PLMN currently accessed by the terminal device.

The foregoing two items of the cell selection policy may be configured based on policies of different network operators. For example, the policy may include a charging policy. The reselection priorities are configured based on charging policies of different network operators, so that the terminal device preferentially camps on a network with a lower charging policy. It should be understood that the policy may alternatively be implemented as another policy, and details are not described herein again.

S703: The first access network device sends the first information to the terminal device. Correspondingly, the terminal device receives the first information from the first access network device.

For example, a message for transmitting the first information is described as follows:

When the first information includes the measurement configuration information, the first access network device sends the measurement configuration information to the terminal device by using an RRC reconfiguration (RRC reconfiguration) message.

When the first information includes the indication information, the first access network device sends the indication information to the terminal device by using the RRC reconfiguration message or an RRC release (RRC release) message.

When the first information includes the cell selection policy, the first access network device sends the cell selection policy to the terminal device by using the RRC release message. For example, the RRC release message includes a cell reselection priority (cell reselection priority) field. The RRC release message may carry the cell selection policy in the cell reselection priority field.

It should be noted that, for the first access network device, after the first access network device performs S701, the first access network device determines, based on the area location of the first access network device and the coverage area of the HPLMN identified by the information about the HPLMN, that the first access network device is close to the coverage area of the HPLMN. If the distance between the location of the first access network device and the coverage area of the HPLMN is less than the preset value, the first access network device performs S702 and S703. On the contrary, if the distance between the location of the first access network device and the coverage area of the HPLMN is greater than or equal to the preset value, the first access network device does not perform S703.

For the terminal device, after the terminal device performs S703, when the first information includes the indication information, the terminal device performs S704a, as shown in the block in Case 1 in FIG. 7. When the first information includes the cell selection policy, the terminal device performs S704b, as shown in the block in Case 2 in FIG. 7. When the first information includes the measurement configuration information, the terminal device performs S704c, as shown in the block in Case 3 in FIG. 7. S704a, S704b, and S704c are described as follows:

S704a: The terminal device starts searching for the HPLMN of the terminal device based on the first information, so that the terminal device accesses the HPLMN in a handover or redirection manner.

The first information in S704a may be implemented as the indication information in S703.

The handover manner in S704a means that the terminal device is handed over from a cell in the PLMN currently accessed by the terminal device to a cell in the HPLMN of the terminal device. For an implementation process of the handover, refer to a conventional technology. Details are not described herein again.

The redirection in S704a means that the terminal device releases a connection in the currently accessed PLMN, and then accesses the HPLMN again. For an implementation process of the redirection, refer to a conventional technology. Details are not described herein again.

S704b: The terminal device searches for the HPLMN of the terminal device for camping based on the cell selection policy in the first information.

For example, the terminal device preferentially selects, based on the cell selection policy, a frequency for searching for the HPLMN, to camp on the HPLMN. Alternatively, the terminal device preferentially camps on the HPLMN based on the cell selection policy and a measurement result. For a process of searching for a frequency for camping, refer to a conventional technology. Details are not described herein again.

S704c: The terminal device performs inter-network measurement based on the measurement configuration information in the first information, to obtain the measurement result.

For example, the measurement configuration information includes inter-network measurement configuration, for example, the frequency in the HPLMN, or the measurement gap duration of the frequency. In this way, the terminal device may determine, based on the measurement configuration information, a frequency (or some frequencies) to be measured and a time domain resource (or resources) on which the frequency is measured, to obtain the measurement result.

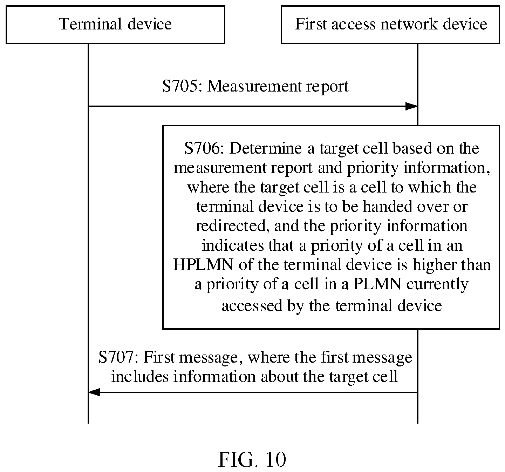

Optionally, in some embodiments, as shown in FIG. 10, after performing S704c, the terminal device further performs S705.

S705: The terminal device sends the measurement report to the first access network device. Correspondingly, the first access network device receives the measurement report from the terminal device.

For example, the measurement report in S705 is a report generated by the terminal device based on the measurement result in S704c.

S706: The first access network device determines a target cell based on the measurement report and priority information.

The target cell is a cell to which the terminal device is to be handed over or redirected, and is a cell in the HPLMN.

The priority information indicates that a priority of the cell in the HPLMN of the terminal device is higher than a priority of the cell in the PLMN currently accessed by the terminal device. For example, for the first access network device, the priority information may be preconfigured, or may be information provided by the first core network device for the first access network device. This is not limited in embodiments of this application.

For example, the measurement report includes a signal quality measurement result of a cell 1 and a signal quality measurement result of a cell 2. The cell 1 is a cell in the PLMN currently accessed by the terminal device, and the cell 2 is a cell in the HPLMN. When the signal quality measurement result of the cell 1 is the same as the signal quality measurement result of the cell 2, or the signal quality measurement result of the cell 1 is better than the signal quality measurement result of the cell 2, but the signal quality measurement result of the cell 2 also meets a requirement, the first access network device determines, based on the priority information, that the target cell is the cell 2.

S707: The first access network device sends a first message to the terminal device. Correspondingly, the terminal device receives the first message from the first access network device.

The first message includes information about the target cell. The target cell in S707 is consistent with the target cell in S706, and details are not described herein again. For example, the first message may be a handover message, to indicate that the target cell is a cell to be handed over to. Alternatively, the first message may be an RRC release message, to indicate that the target cell is a cell to which redirection is performed. It should be understood that the first message may be another message. This is not limited in this embodiment of this application.

For the terminal device, after performing S707, the terminal device may be handed over or redirected to the target cell.

In this way, the target cell is a cell determined by the first access network device based on the priority information. When the priority of the cell in the HPLMN is higher than the priority of the cell in the PLMN currently accessed by the terminal device, the terminal device may be preferentially handed over (or re-determined) to the cell in the HPLMN, so that the terminal device is handed over (or re-determined) from the currently accessed PLMN to the HPLMN.

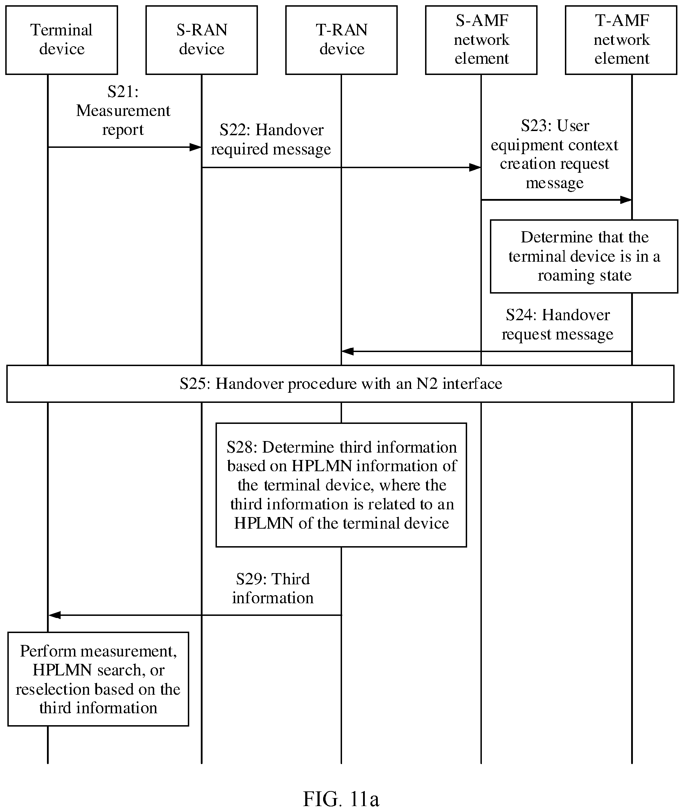

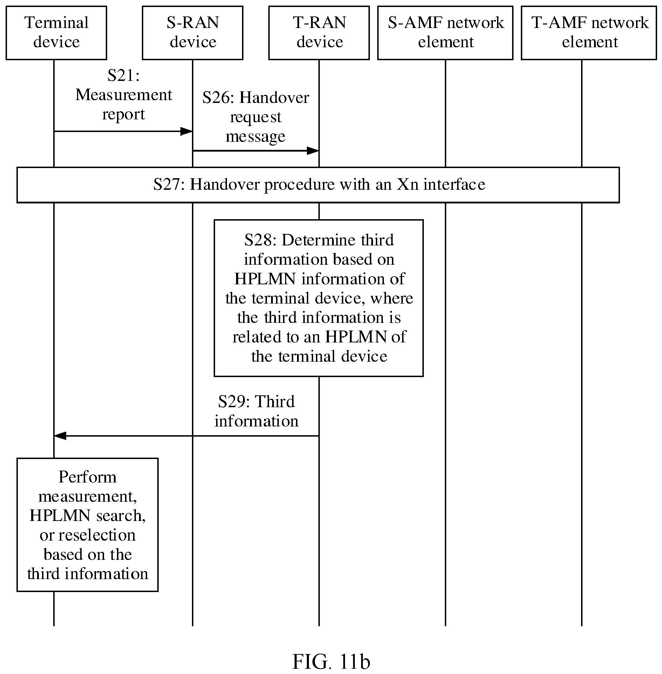

In some embodiments, the terminal device moves in the currently accessed PLMN (namely, a visited network). In the movement scenario, two access network devices, namely, the first access network device and a second access network device, are involved. The first access network device and the second access network device are different access network devices. The first access network device may be used as a source access network device, to be specific, an access network device accessed by the terminal device before the terminal device moves, and may be denoted as an S-RAN. Correspondingly, the second access network device may be used as a target access network device, to be specific, an access network device accessed by the terminal device after the terminal device moves, and may be denoted as a T-RAN. Refer to FIG. 11a or FIG. 11b. Specific steps are as follows.

S21: The terminal device sends the measurement report (measurement report) to the S-RAN device. Correspondingly, the S-RAN device receives the measurement report from the terminal device.

The measurement report is obtained after the terminal device performs measurement based on the measurement configuration information, or the measurement report is obtained after the terminal device measures the frequency in the currently accessed PLMN. For details, refer to a conventional technology. Details are not described herein again.

For a sending occasion of the measurement report, refer to a conventional technology. For example, the terminal device sends the measurement report under a specific trigger condition or sends the measurement report based on a specific period. This is not limited in this embodiment of this application.

For example, for an implementation process of S21, refer to the description of S705. Details are not described herein again.

For the S-RAN device, the S-RAN device determines the target cell based on the measurement report, to perform handover. If there is no Xn interface between a T-RAN device corresponding to the target cell and the S-RAN device, the handover is a handover procedure with an N2 interface. On the contrary, if there is an X2/Xn interface between the T-RAN device corresponding to the target cell and the S-RAN device, the handover is a handover procedure with the X2/Xn interface.

The 5G network is used as an example. The handover procedure with the N2 interface is described below.

S22: The S-RAN device sends a handover required (handover required) message to an S-AMF network element. Correspondingly, the S-AMF network element receives the handover required message from the terminal device.

The S-AMF network element is in communication connection with the S-RAN device. For example, the S-AMF network element is connected to the S-RAN device through the N2 interface.

The handover required message is used to request to be handed over to the target cell. For a process of determining the target cell, refer to the description of S706. Details are not described herein again.

For example, the handover required message may carry the information about the HPLMN of the terminal device. The information may be carried in a container (for example, a source to target transparent container). The container is sent by the S-RAN device to the T-RAN device and is carried in the handover required message. For a process in which the S-RAN device obtains the information about the HPLMN, refer to the description of S701. Details are not described herein again. Certainly, the handover required message may alternatively not carry the information about the HPLMN of the terminal device. In other words, the container does not include the information about the HPLMN of the terminal device, or the handover required message does not carry the container. This is not limited in this embodiment of this application.

For the S-AMF network element, the S-AMF network element selects a T-AMF network element based on the handover required message. The T-AMF network element is connected to the T-RAN device through the N2 interface. The S-AMF network element performs S23.

S23: The S-AMF network element sends a user equipment context creation request message to the T-AMF network element. Correspondingly, the T-AMF network element receives the user equipment context creation request message from the S-AMF network element.

For example, when the handover required message carries the information about the HPLMN of the terminal device by using the container, the user equipment context creation request message also includes the container. On the contrary, when the handover required message does not carry the information about the HPLMN of the terminal device, the user equipment context creation request message also does not carry the information about the HPLMN of the terminal device.

S24: When the T-AMF network element determines that the terminal device is in the roaming state, the T-AMF network element sends a handover request (handover request) message to the T-RAN device. Correspondingly, the T-RAN device receives the handover request message from the T-AMF network element.

For example, the T-AMF network element determines, based on an MCC and an MNC in the SUCI of the terminal device, that the terminal device is in the roaming state.

The handover request message includes the information about the HPLMN of the terminal device and the registered PLMN information of the terminal device. For example, the information about the HPLMN of the terminal device includes an HPLMN ID of the terminal device and the registered PLMN information of the terminal device, for example, a UE registered PLMN ID.

It should be noted that, when the user equipment context creation request message carries the information about the HPLMN of the terminal device by using a container, the handover request message also carries the information about the HPLMN of the terminal device by using the container. On the contrary, when the user equipment context creation request message does not carry the information about the HPLMN of the terminal device, the T-AMF network element adds the information about the HPLMN of the terminal device stored in the T-AMF network element to the handover request message.

S25: The terminal device, the S-RAN device, the T-RAN device, the S-AMF network element, and the T-AMF network element jointly perform a handover procedure with the N2 interface.

For an implementation process of S25, refer to a conventional technology. Details are not described herein again.

In this way, for the T-RAN device, the T-RAN device may obtain the information about the HPLMN of the terminal device from the T-AMF network element by using the N2 handover process.

The 5G network is used as an example. The handover procedure with the Xn interface is described below.

S26: The S-RAN device sends a handover request (handover request) message to the T-RAN device. Correspondingly, the T-RAN device receives the handover request message from the S-RAN device.

The handover request message includes the information about the HPLMN of the terminal device and the registered PLMN information of the terminal device. For example, the information about the HPLMN of the terminal device includes the HPLMN ID of the terminal device and the registered PLMN information of the terminal device, for example, the UE registered PLMN ID.

S27: The terminal device, the S-RAN device, the T-RAN device, the S-AMF network element, and the T-AMF network element jointly perform the handover procedure with the Xn interface.

For an implementation process of S27, refer to a conventional technology. Details are not described herein again.

In this way, for the T-RAN device, the T-RAN device may obtain the information about the HPLMN of the terminal device from the S-RAN network element by using the handover procedure with the Xn interface.

It should be noted that in FIG. 11a and FIG. 11b, the S-AMF network element and the T-AMF network element may be a same core network device, or may be different core network devices. This is not limited in this embodiment of this application.

For the T-RAN device, after obtaining the information about the HPLMN of the terminal device based on the N2 handover procedure or the Xn handover procedure, the T-RAN device performs S28 and S29.

S28: The T-RAN device determines third information based on the information about the HPLMN of the terminal device.

The third information is related to the HPLMN of the terminal device. For example, for the third information, refer to the description of the first information in S702, and details are not described herein again.

S29: The T-RAN device sends the third information to the terminal device. Correspondingly, the terminal device receives the third information from the T-RAN device.

For an implementation process of S29, refer to the description of S703. Details are not described herein again. After S29 is performed, the terminal device may perform S704a, S704b, or S704c. Details are not described herein again.

It should be understood that FIG. 11a shows the handover procedure with the N2 interface by using only the 5G network as an example. In the 4G network, the Xn interface is replaced with an X2 interface, and the AMF network element is replaced with an MME. The processing process in FIG. 11a is also applicable. Similarly, FIG. 11b shows the handover procedure with the Xn interface by using only the 5G network as an example. In the 4G network, the Xn interface is replaced with the X2 interface, that is, the handover procedure with the Xn interface is replaced with a handover procedure with the X2 interface. The AMF network element is replaced with the MME, and the processing process in FIG. 11b is also applicable.

In this way, even if the terminal device is handed over from a cell of the S-RAN device (namely, the first access network device) to a cell of the T-RAN device (namely, the second access network device), the second access network device can determine the third information in time. In this way, the terminal device performs handover, redirection, or reselection based on the third information, to access the HPLMN. This shortens or eliminates service transmission interruption time, and helps improve user experience.

### Embodiment 2

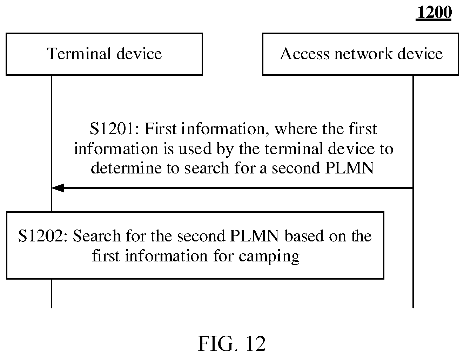

Embodiment 2 is described below with reference to FIG. 12 to FIG. 21. Embodiment 2 may be the second communication method provided in embodiments of this application.

In the second communication method provided in an embodiment of this application, a terminal device receives first information from an access network device of a first PLMN. The first PLMN is a PLMN currently accessed by the terminal device, and the first information is used by the terminal device to determine to search for a second PLMN. The first PLMN is different from the second PLMN. The terminal device searches for the second PLMN for camping based on the first information. In this way, because the first information can enable the terminal device to determine an occasion for searching for the second PLMN, the terminal device can also search for the second PLMN for camping in time, and the terminal device can camp on the second PLMN from the first PLMN in time. This shortens or eliminates service transmission interruption time, ensures normal service transmission, and improves user experience.

As shown in FIG. 12, the second communication method 1200 according to an embodiment of this application includes the following steps.

S1201: The access network device in the first PLMN sends the first information to the terminal device. Correspondingly, the terminal device receives the first information from the access network device in the first PLMN.

The first PLMN is the PLMN currently accessed by the terminal device.

The first information is used by the terminal device to determine to search for the second PLMN. For example, the first information includes information about a location area in which the access network device is located. For details, refer to descriptions in Example A and Example B. Alternatively, the first information includes second PLMN information, for example, an ID of the second PLMN. For details, refer to descriptions in Example C and Example D.

The first PLMN is different from the second PLMN. For example, the first PLMN includes an HPLMN of the terminal device, and the second PLMN includes an EPLMN of the terminal device. For details, refer to descriptions in Example A and Example C. In this case, the access network device in S1201 is replaced with a first access network device. Alternatively, the first PLMN includes the EPLMN of the terminal device, and the second PLMN includes the HPLMN of the terminal device. For details, refer to descriptions in Example B and Example D. In this case, the access network device in S1201 is replaced with a second access network device.

It should be noted that, in the second communication method 1200 in an embodiment of this application, the HPLMN and the EPLMN are mutually different networks. In other words, different networks for the HPLMN of the terminal device include the EPLMN of the terminal device. Different networks for the EPLMN of the terminal device include the HPLMN of the terminal device.

S1202: The terminal device searches for the second PLMN for camping based on the first information.

For example, when the first information includes the information about the location area in which the access network device is located, for an implementation process of S1202, refer to descriptions in Example A and Example B. Alternatively, when the first information includes the second PLMN information, for an implementation process of S1202, refer to descriptions in Example C and Example D.

The following separately describes Example A, Example B, Example C, and Example D.

Example A: The first information includes information about a location area in which a third access network device is located, the first PLMN includes the HPLMN of the terminal device, and the second PLMN includes the EPLMN of the terminal device. In other words, the terminal device camps on the EPLMN from the HPLMN, and the terminal device determines, based on the location area in which the third access network device is located, whether to search for the second PLMN (that is, the EPLMN).

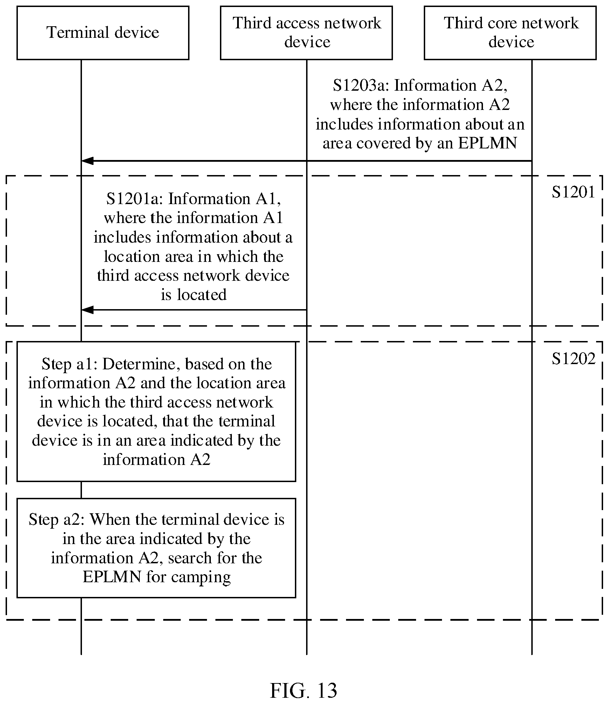

As shown in FIG. 13, steps of Example A are described as follows:

S1203a: A third core network device in the HPLMN sends information A2 to the terminal device. Correspondingly, the terminal device receives the information A2 from the third core network device in the HPLMN.

The third core network device is a core network device in the HPLMN. For example, the third core network device may be an MME in a 4G network, or may be an AMF network element in a 5G network. Certainly, the third core network device may be a core network device in a network of another communication standard. This is not limited in embodiments of this application. In an embodiment of this application, the MME in the 4G network or the AMF network element in the 5G network is used as an example for description.

The terminal device is in a connected state when performing S1203a.

The information A2 includes information about an area covered by the second PLMN, that is, information about an area covered by the EPLMN.

For example, the EPLMN in the information A2 may be denoted as a target EPLMN. The target EPLMN meets at least one of the following preset conditions:

Preset condition a1: A coverage area of the target EPLMN overlaps a coverage area of the HPLMN.

Preset condition a2: The coverage area of the target EPLMN is close to the coverage area of the HPLMN. That the coverage area of the target EPLMN is close to the coverage area of the HPLMN may be understood as that the coverage area of the target EPLMN is tangent to the coverage area of the HPLMN, or there is no overlapping area between the coverage area of the target EPLMN and the coverage area of the HPLMN, and the coverage area of the target EPLMN is not tangent to the coverage area of the HPLMN, but an interval between the coverage area of the target EPLMN and the coverage area of the HPLMN is less than a preset value.

Preset condition a3: The coverage area of the target EPLMN overlaps a service area of the third core network device.

Preset condition a4: The coverage area of the target EPLMN is close to the service area of the third core network device. That the coverage area of the target EPLMN is close to the service area of the third core network device may be understood as that the coverage area of the target EPLMN is tangent to the service area of the third core network device, or there is no overlapping area between the coverage area of the target EPLMN and the service area of the third core network device, and the coverage area of the target EPLMN is not tangent to the service area of the third core network device, but an interval between the coverage area of the target EPLMN and the service area of the third core network device is less than a preset value.

It should be understood that the preset condition a1 to the preset condition a4 are merely examples of the preset condition, met by the target EPLMN, in the information A1. Certainly, the preset condition, met by the target EPLMN, in the information A1 may alternatively be described in another way. This is not limited in embodiments of this application.

For example, the target EPLMN is still used as an example, and the area in the information A2 may include an entire area covered by the target EPLMN. An entire area covered by the target EPLMN are described as follows: The area covered by the target EPLMN may be a physically corresponding geographical area, for example, a remote area in China. For example, China Mobile is used as an example. An area in which China Mobile provides a shared network service for other network operators such as China Unicorn and China Telecom includes a city A. In this case, an area covered by an EPLMN includes the city A. The area covered by the EPLMN may alternatively have another name, for example, an effective area of the EPLMN. In an embodiment of this application, the area covered by the EPLMN is merely used as an example for description.

For the target EPLMN, a manner of representing the area covered by the target EPLMN is described as follows: The area covered by the target EPLMN may be represented by using a location area set or an administrative area. For example, an area covered by an EPLMN includes the city A, and an area set planned by China Mobile in the city A is marked as 00000 to 09999, where 00000 indicates a county 1 of the city A, 00001 indicates a county 2 of the city A, 00002 indicates a county 3 of the city A, and the rest may be deduced by analogy. Details are not described again. For another example, an area covered by an EPLMN includes a city B, and an area set planned by China Mobile in the city B is denoted as 10000 to 19999, where 10000 indicates a county 1 of the city B, 10001 indicates a county 2 of the city B, 10002 indicates a county 3 of the city B, and the rest may be deduced by analogy. Details are not described again. It should be understood that with evolution of communication technologies, there may also be another representation manner. This should not be construed as a limitation on embodiments of this application.

Alternatively, the area in the information A2 may include a part of the area covered by the target EPLMN, for example, one of the following three areas.

First: an overlapping area. The overlapping area is an area in which the service area of the third core network device overlaps the coverage area of the target EPLMN. For example, an area set included in the information A2 is represented as {00000, 00001, 00002, 00003}. In this case, the overlapping area includes the county 1, the county 2, the county 3, and a county 4 of the city A.

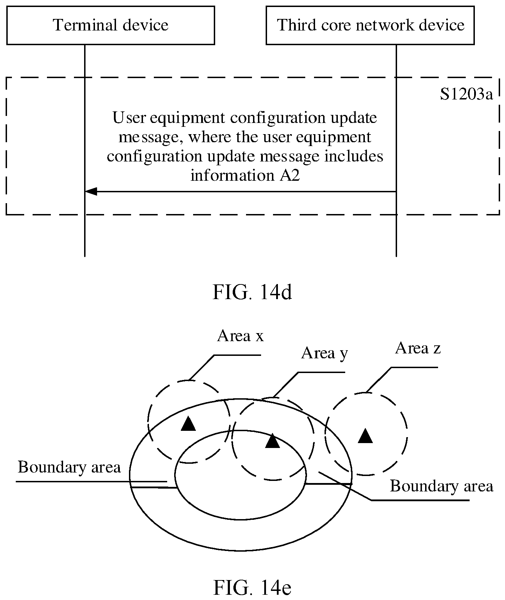

Second: a boundary area. The boundary area is an area, in the overlapping area, whose distance from a boundary of the overlapping area is less than a threshold a1. For example, the area set included in the information A2 is represented as {00000, 00001, 00002}. In this case, the overlapping area includes the county 1, the county 2, and the county 3 of the city A. For example, as shown in FIG. 14e, an upper half part of a ring-shaped area represents the boundary area indicated by the information A2.

Third: a first area. The first area is an area, in the boundary area, whose distance from the terminal device is less than a threshold a2. For example, the area set included in the information A2 is represented as {00000, 00001}. In this case, the overlapping area includes the county 1 and the county 2 of the city A. As shown in FIG. 14e, the terminal device may be located within the boundary area, or may be located outside the boundary area. For example, as shown in FIG. 14e, locations indicated by triangles indicate locations of the terminal device. Areas whose distances from the terminal device are less than the threshold a2 may be represented as an area x, an area y, and an area z. Areas in which the area x, the area y, and the area z respectively overlap the upper half of the ring-shaped area indicate the first area indicated by the information A2.

For the third core network device, the information A2 may be preconfigured, or may be information independently determined by the third core network device. This is not limited in embodiments of this application.

Optionally, an implementation process of S 1203a includes the following four examples:

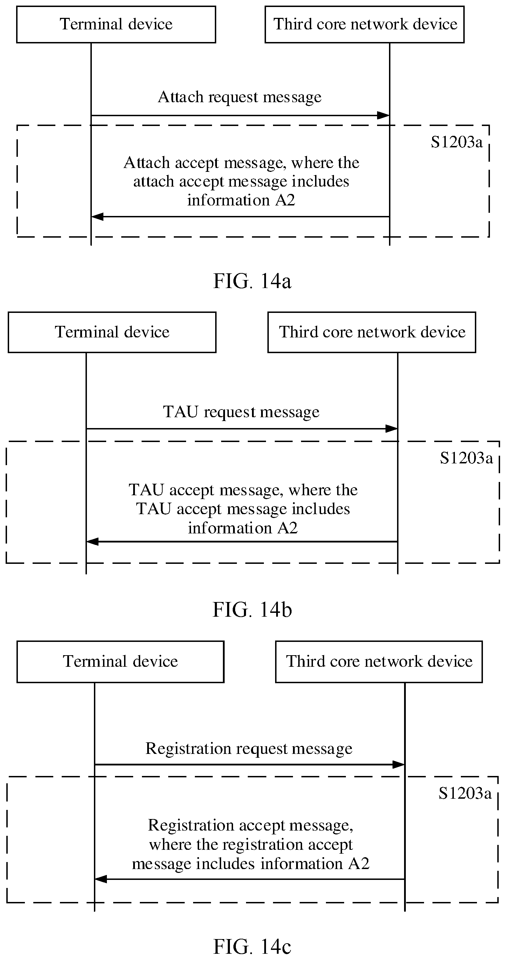

Example 1: An initial attach process of the 4G network is used as an example. Steps are shown in FIG. 14a.

First, the terminal device sends an attach request (attach request) message to the third core network device in the HPLMN. Correspondingly, the third core network device in the HPLMN receives the attach request message from the terminal device.

The third core network device may be implemented as an MME.

Then, the third core network device in the HPLMN sends the information A2 to the terminal device by using an attach accept (attach accept) message. Correspondingly, the terminal device receives the information A2 from the third core network device in the HPLMN by using the attach accept message.

In other words, the attach accept message includes the information A2.

It should be understood that for the initial attach process of the 4G network, refer to the related 3GPP technical specification. Details are not described herein again.

In this way, the terminal device may obtain the information A2 in a 4G network registration process of the HPLMN, to determine whether the terminal device is in the area covered by the EPLMN, so as to search for the EPLMN for camping in time.

Example 2: A TAU process of the 4G network is used as an example. Steps are shown in FIG. 14b.

First, the terminal device sends a TAU request (TAU request) message to the third core network device in the HPLMN. Correspondingly, the third core network device in the HPLMN receives the TAU request message from the terminal device.

The third core network device may be implemented as an MME.

Then, the third core network device in the HPLMN sends the information A2 to the terminal device by using a TAU accept (TAU accept) message. Correspondingly, the terminal device receives the information A2 from the third core network device in the HPLMN by using the TAU accept message.

In other words, the TAU accept message includes the information A2.

It should be understood that for the TAU process of the 4G network, refer to the related 3GPP technical specification. Details are not described herein again.

In this way, the terminal device may obtain the information A2 in a TAU process of the HPLMN, to determine whether the terminal device is in the area covered by the EPLMN, so as to search for the EPLMN for camping in time.

Example 3: A registration process of the 5G network is used as an example. Steps are shown in FIG. 14c.

First, the terminal device sends a registration request (registration request) message to the third core network device in the HPLMN. Correspondingly, the third core network device in the HPLMN receives the registration request message from the terminal device.

The third core network device may be implemented as an AMF network element.

Then, the third core network device in the HPLMN sends the information A2 to the terminal device by using a registration accept (registration accept) message. Correspondingly, the terminal device receives the information A2 from the third core network device in the HPLMN by using the registration accept message.

In other words, the registration accept message includes the information A2.

It should be understood that for the registration process of the 5G network, refer to the related 3GPP technical specification. Details are not described herein again.

In this way, the terminal device may obtain the information A2 in a 5G network registration process of the HPLMN, to determine whether the terminal device is in the area covered by the EPLMN, so as to search for the EPLMN for camping in time.

Example 4: A configuration update process of the 5G network is used as an example. Steps are shown in FIG. 14d.

The third core network device in the HPLMN sends the information A2 to the terminal device by using a user equipment configuration update (UE configuration update) message. Correspondingly, the terminal device receives the information A2 from the third core network device in the HPLMN by using the user equipment configuration update message.

The third core network device may be implemented as an AMF network element.

In other words, the user equipment configuration update message includes the information A2.

It should be understood that for the configuration update process of the 5G network, refer to the related 3GPP technical specification. Details are not described herein again.

In this way, the terminal device may obtain the information A2 in the configuration update process of the 5G network of the HPLMN, to determine whether the terminal device is in the area covered by the EPLMN, so as to search for the EPLMN for camping in time.

It should be noted that S1203a is an optional step. Alternatively, the terminal device may not perform S1203a. For example, the terminal device may also locally preconfigure the information A2. This is not limited in this embodiment of this application.

Correspondingly, as shown in FIG. 13, S1201 is implemented as S1201a.

S1201a: The third access network device in the HPLMN sends the information A1 to the terminal device. Correspondingly, the terminal device receives the information A1 from the third access network device in the HPLMN.

The information A1 includes the information about the location area in which the third access network device is located.

For example, the information A1 is carried in a system message. In other words, the terminal device is in an idle state when performing S1201a. For example, the terminal device is located at an edge of the coverage area of the HPLMN, and signal quality is poor. The third access network device in the HPLMN sends the information A1 to the terminal device by using the system message. Correspondingly, the terminal device receives the information A1 from the third access network device in the HPLMN by using the system message.

It should be noted that when S 1203a is performed, for the terminal device, the terminal device first performs S1203a, and then performs S1201a. For example, when the terminal device is in a connected state in the coverage area of the HPLMN, the terminal device receives the information A2 from the third core network device in the HPLMN. When the terminal device moves to the edge of the coverage area of the HPLMN, the terminal device receives the information A1, and further determines, based on the information A1 and the information A2, whether the terminal device is in the area indicated by the information A2.

Correspondingly, as shown in FIG. 13, S1202 is implemented as step a1 and step a2.

Step a1: The terminal device determines, based on the information A2 and the location area in which the third access network device is located, that the terminal device is in the area indicated by the information A2.

For example, if the location area in which the third access network device is located belongs to the area indicated by the information A2, the terminal device considers that the terminal device is already in the area indicated by the information A2.

Step a2: When the terminal device is in the area indicated by the information A2, the terminal device searches for the EPLMN for camping.

For example, a PLMN in the EPLMN, for example, the target EPLMN, is still used as an example. When the terminal device is in the area indicated by the information A2, the terminal device searches for a frequency of the target EPLMN, and then camps on the target EPLMN. For details, refer to a conventional technology. Details are not described herein again.

It should be noted that step a2 may be unconditionally triggered, or may be performed by the terminal device when a specific trigger condition is met. The trigger condition of step a2 includes a trigger condition a1. The trigger condition a1 is described as follows:

A communication standard of an HPLMN currently accessed by the terminal device is lower than a communication standard of the target EPLMN in the information A1. For example, the communication standard of the HPLMN currently accessed by the terminal device may be the 4G network of the HPLMN. The communication standard of the target EPLMN in the information A1 may be a 5G network of the target EPLMN. In this case, after camping on the 5G network of the target EPLMN, the terminal device can implement better data transmission performance. It should be understood that the trigger condition of step a2 may alternatively include another trigger condition, and details are not described herein again.

In this way, in a scenario of Example A, the terminal device determines, based on the location area in which the third access network device is located, whether the terminal device is in the coverage area of the EPLMN. If yes, the terminal device searches for the EPLMN in time. In this way, the terminal device is handed over from the HPLMN to the EPLMN in time. This reduces a probability of network disconnection, shortens or eliminates service transmission interruption time, and improves user experience.

Example B: The first information includes information about a location area in which the first access network device is located, the first PLMN includes the EPLMN of the terminal device, and the second PLMN includes the HPLMN of the terminal device. In other words, the terminal device camps on the HPLMN from the EPLMN, and the terminal device determines, based on the location area in which the first access network device is located, whether to search for the second PLMN (namely, the HPLMN).

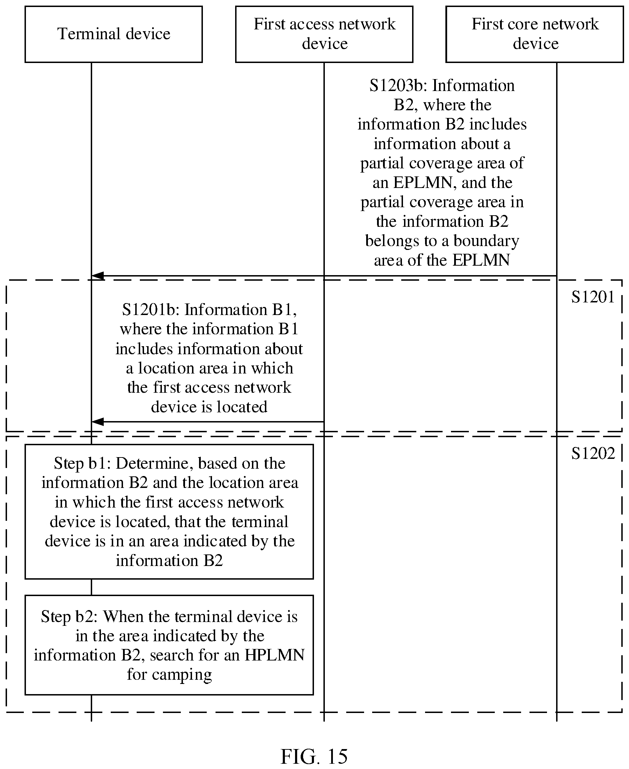

As shown in FIG. 15, steps of Example B are described as follows.

S1203b: A first core network device in the EPLMN sends information B2 to the terminal device. Correspondingly, the terminal device receives the information B2 from the first core network device in the EPLMN.

The information B2 includes information about a partial coverage area of the first PLMN, that is, information about a partial coverage area of the EPLMN. The partial coverage area in the information B2 belongs to a boundary area of the first PLMN, that is, belong to a boundary area of the EPLMN.

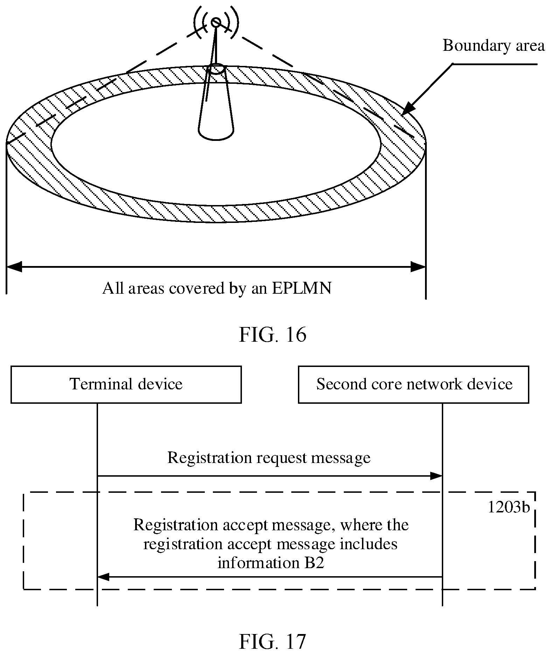

It should be noted that, for the area covered by the EPLMN, refer to the description of the term explanation. For a specific EPLMN, a boundary area of the EPLMN may be understood as an area, in an entire area covered by the EPLMN, whose distance from an edge of a coverage area of the EPLMN is less than a preset value by using the edge of the coverage area of the EPLMN as a reference, as shown in a part filled with oblique lines in FIG. 16.

For example, a specific EPLMN is used as an example, and is denoted as a target EPLMN. An area in the information B2 includes at least one of the following:

First: an overlapping area. The overlapping area is an area in which a service area of the first core network device overlaps a boundary area of the target EPLMN.

Second: a first area. The first area is an area, in the overlapping area, whose distance from the terminal device is less than a threshold b1.

For the first core network device, the information B2 may be preconfigured, or may be information independently determined by the first core network device. This is not limited in this embodiment of this application.

Optionally, an implementation process of S1203b includes the following examples:

A registration process of the 5G network is used as an example. Steps are shown in FIG. 17.

First, the terminal device sends a registration request (registration request) message to the first core network device in the EPLMN. Correspondingly, the first core network device in the EPLMN receives the registration request message from the terminal device.

The first core network device may be implemented as an AMF network element.

Then, the first core network device in the EPLMN sends the information B2 to the terminal device by using a registration accept (registration accept) message. Correspondingly, the terminal device receives the information B2 from the first core network device in the EPLMN by using the registration accept message.

In other words, the registration accept message includes the information B2.

In this way, the terminal device may obtain the information B2 in a 5G network registration process of the HPLMN, to determine whether the terminal device is in the boundary area of the EPLMN, so as to search for the HPLMN for camping in time.

Correspondingly, as shown in FIG. 15, S1201 is implemented as S1201b.

S1201b: The first access network device in the EPLMN sends information B1 to the terminal device. Correspondingly, the terminal device receives the information B1 from the first access network device in the EPLMN.

For example, the information B1 is carried in the system message. In other words, the terminal device is in the idle state when performing S1201b. For example, the terminal device is located at an edge of the coverage area of the EPLMN, and signal quality is poor. The first access network device in the EPLMN sends the information B1 to the terminal device by using the system message. Correspondingly, the terminal device receives the information B1 from the first access network device in the EPLMN by using the system message.

It should be noted that when S 1203b is performed, for the terminal device, the terminal device first performs S1203b, and then performs S1201b. For example, when the terminal device is in the connected state in the coverage area of the EPLMN, the terminal device receives the information B2 from the first core network device in the EPLMN. When the terminal device moves to the edge of the coverage area of the EPLMN, the terminal device receives the information B1, and further determines, based on the information B1 and the information B2, whether the terminal device is in the area indicated by the information B2.

Correspondingly, as shown in FIG. 15, S1202 is implemented as step b1 and step b2.

Step b 1: The terminal device determines, based on the information B2 and the location area in which the first access network device is located, that the terminal device is in the area indicated by the information B2.

For example, if the location area in which the first access network device is located belongs to the area indicated by the information B2, the terminal device considers that the terminal device is already in the area indicated by the information B2.

Step b2: When the terminal device is in the area indicated by the information B2, the terminal device searches for the HPLMN for camping.

For example, when the terminal device is in the area indicated by the information B2, the terminal device searches for a frequency of the HPLMN, and then camps on the HPLMN. For details, refer to a conventional technology. Details are not described herein again.

In this way, in a scenario of Example B, the terminal device determines, based on the location area in which the first access network device is located, whether the terminal device is in the boundary area of the EPLMN. If yes, the terminal device searches for the HPLMN in time. In this way, the terminal device is handed over from the EPLMN to the HPLMN in time. This reduces a probability of network disconnection, shortens or eliminates service transmission interruption time, and improves user experience.

Example C: The first information includes the second PLMN information, that is, inter-network PLMN information. The first PLMN includes the HPLMN of the terminal device, and the second PLMN includes the EPLMN of the terminal device. In other words, the terminal device is handed over from the HPLMN to the EPLMN of the terminal device, and the terminal device determines, based on the second PLMN information, whether to search for the second PLMN (namely, the EPLMN).

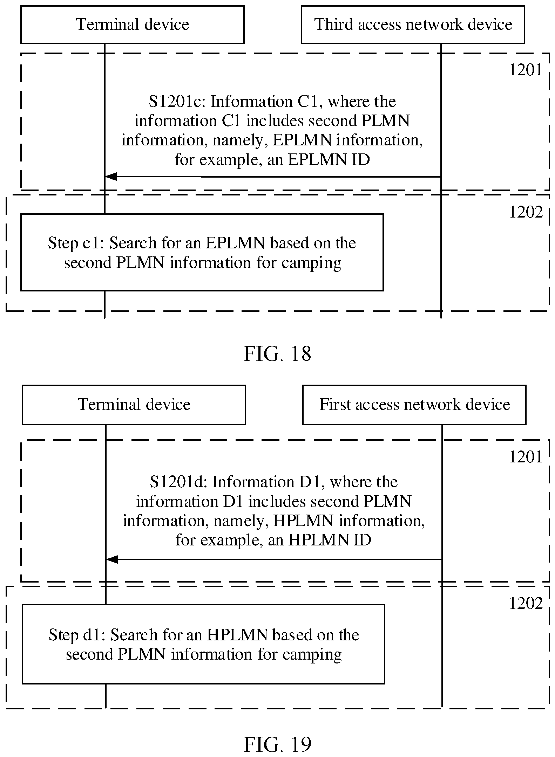

As shown in FIG. 18, steps of Example C are described as follows.

As shown in FIG. 18, S1201 is implemented as S1201c.

S1201c: The third access network device in the HPLMN sends information C1 to the terminal device. Correspondingly, the terminal device receives the information C1 from the third access network device in the HPLMN.

The information C1 includes the second PLMN information, namely, EPLMN information, for example, an EPLMN ID. In other words, the information C1 carries inter-network information. The inter-network information in the information C1 may be understood as information about a PLMN different from a PLMN to which the third access network device belongs. For example, the PLMN to which the third access network device belongs is the HPLMN. In this case, the information C1 includes the EPLMN ID.

For example, a PLMN in the EPLMN is recorded as the target EPLMN. An example in which the information C1 includes information about the target EPLMN is used for description. The target EPLMN in the information C1 meets one or more of the following preset conditions:

Preset condition c1: The target EPLMN is close to the third access network device. That the target EPLMN is close to the third access network device may be understood as that a distance between the area location in which the third access network device is located and a reference point in the coverage area of the target EPLMN is less than a preset value. The reference point may be a central point of the coverage area of the target EPLMN, or a point on an edge of the coverage area of the target EPLMN. Selection of the reference point is not limited in this embodiment of this application.

Preset condition c2: The target EPLMN overlaps the coverage area of the HPLMN.

It should be understood that the preset condition c1 and the preset condition c2 are merely examples of the preset condition met by the target EPLMN in the information C 1. Certainly, the preset condition met by the target EPLMN in the information C1 may alternatively be described in another way. This is not limited in this embodiment of this application.

Optionally, the information C1 may be carried in the system message. In this case, S1201c may be implemented as follows: The third access network device in the HPLMN sends the information C1 to the terminal device by using the system message. Correspondingly, the terminal device receives the information C1 from the third access network device in the HPLMN by using the system message.

For example, in a possible implementation, the system message includes a plurality of system information blocks (system information blocks, SIBs). The information C1 may be carried in at least one of the following SIBs:

First: a first SIB. The first SIB is a SIB used to carry intra-frequency information, the intra-frequency information includes information about a frequency in the target EPLMN, and the frequency in the intra-frequency information is the same as a frequency of a cell on which the terminal device currently camps. For example, the first SIB may be a SIB 3 specified in the related 3GPP technical specification.

Second: a second SIB. The second SIB is a SIB used to carry inter-frequency information, the inter-frequency information includes information about a frequency in the target EPLMN, and the frequency in the inter-frequency information is different from a frequency of the cell on which the terminal device currently camps. For example, the second SIB may be a SIB 4 specified in the related 3GPP technical specification.

Third: a third SIB. The third SIB is a SIB used to carry inter-system information, the inter-system information includes information about the communication standard of the target EPLMN, and the communication standard in the inter-system information is different from a communication standard of the cell on which the terminal device currently camps. For example, the third SIB may be a SIB 5 specified in the related 3GPP technical specification.

For example, in another possible implementation, the system message may be a dedicated system message, and is dedicated to transmitting the information C1.

As shown in FIG. 18, S1202 is implemented as step c1.

Step c1: The terminal device searches for the EPLMN for camping based on the second PLMN information.

The second PLMN information in step c1 includes information about the target EPLMN, for example, a PLMN ID of the target EPLMN.

For example, the terminal device determines, based on the second PLMN information, a PLMN identified by the second PLMN information. When determining that the PLMN is the EPLMN of the terminal device, the terminal device searches for a frequency of the PLMN, and then camps on the PLMN. For details, refer to a conventional technology. Details are not described herein again.

In this way, in a scenario of Example C, the terminal device searches for a corresponding EPLMN for camping based on the received inter-network information, for example, the EPLMN ID carried in the information C1. This reduces a probability of network disconnection, shortens or eliminates service transmission interruption time, and improves user experience.

Example D: The first information includes the second PLMN information, that is, inter-network PLMN information. The first PLMN includes the EPLMN of the terminal device, and the second PLMN includes the HPLMN of the terminal device. In other words, the terminal device is handed over from the EPLMN to the HPLMN, and the terminal device determines, based on the second PLMN information, whether to search for the second PLMN (namely, the HPLMN).

As shown in FIG. 19, steps of Example D are described as follows.

As shown in FIG. 19, S1201 is implemented as S1201d.

S1201d: The first access network device in the EPLMN sends information D1 to the terminal device. Correspondingly, the terminal device receives the information D1 from the first access network device in the EPLMN.

The information D1 includes the second PLMN information, namely, HPLMN information, for example, an HPLMN ID. In other words, the information D1 carries the inter-network information. The inter-network information in the information D1 may be understood as information about a PLMN different from a PLMN to which the first access network device belongs. For example, the PLMN to which the first access network device belongs is the EPLMN. In this case, the information D1 includes the HPLMN ID.

For example, when determining that the HPLMN meets one or more of the following preset conditions, the first access network device performs S1201d. The preset condition is described as follows:

Preset condition d1: The HPLMN is close to the first access network device. That the HPLMN is close to the first access network device may be understood as that a distance between an area location in which the first access network device is located and a reference point in the coverage area of the HPLMN is less than a preset value. The reference point may be a central point of the coverage area of the HPLMN, or a point on an edge of the coverage area of the HPLMN. Selection of the reference point is not limited in embodiments of this application.

Preset condition d2: The HPLMN overlaps a coverage area of an EPLMN to which the first access network device belongs.

It should be understood that the preset condition d1 and the preset condition d2 are merely examples of the preset condition met by the HPLMN in the information D 1. Certainly, the preset condition met by the HPLMN in the information D1 may alternatively be described in another way. This is not limited in embodiments of this application.

Optionally, the information D1 may be carried in the system message. In this case, S1201d may be implemented as follows: The first access network device in the EPLMN sends the information D1 to the terminal device. Correspondingly, the terminal device receives the information D1 from the first access network device in the EPLMN.

For example, in a possible implementation, the system message includes a plurality of SIBs. The information D1 may be carried in at least one of the following SIBs:

First: a first SIB. The first SIB is a SIB used to carry intra-frequency information, the intra-frequency information includes information about a frequency in the HPLMN, and the frequency in the intra-frequency information is the same as a frequency of a cell on which the terminal device currently camps. For example, the first SIB may be a SIB 3 specified in the related 3GPP technical specification.

Second: a second SIB. The second SIB is a SIB used to carry inter-frequency information, the inter-frequency information includes information about a frequency in the HPLMN, and the frequency in the inter-frequency information is different from the frequency of the cell on which the terminal device currently camps. For example, the second SIB may be a SIB 4 specified in the related 3GPP technical specification.

Third: a third SIB. The third SIB is a SIB used to carry inter-system information, the inter-system information includes information about the communication standard of the HPLMN, and the communication standard in the inter-system information is different from a communication standard of the cell on which the terminal device currently camps. For example, the third SIB may be a SIB 5 specified in the related 3GPP technical specification.

For example, in another possible implementation, the system message may be a dedicated system message, and is dedicated to transmitting the information D1.

As shown in FIG. 19, S1202 is implemented as step d1.

Step d1: The terminal device searches for the HPLMN for camping based on the second PLMN information.

The second PLMN information in step d1 includes the information about the HPLMN, for example, the HPLMN ID.

For example, the terminal device determines, based on the second PLMN information, an HPLMN identified by the second PLMN information. When determining that the PLMN is an HPLMN of the terminal device, the terminal device searches for a frequency of the HPLMN, and then camps on the HPLMN. For details, refer to a conventional technology. Details are not described herein.

In this way, in a scenario of Example D, the terminal device searches for a corresponding HPLMN for camping based on the received inter-network information, for example, the HPLMN ID carried in the information D1. This reduces a probability of network disconnection, shortens or eliminates service transmission interruption time, and improves user experience.

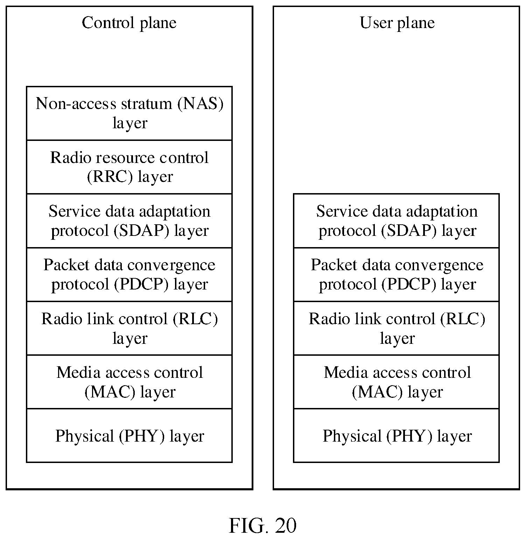

It should be noted that, for the terminal device, the terminal device performs modulation and demodulation according to a protocol specified in a supported communication technology. The protocol specified in the communication technology in embodiments of this application may also be referred to as a communication protocol. A communication protocol stack is a sum of communication protocols at all layers. For example, refer to FIG. 20. A communication protocol stack on a terminal device side may be divided into a control plane and a user plane that are vertically arranged. The control plane is used to transmit control signaling, and mainly includes a non-access stratum (non-access stratum, NAS) layer, a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer. The user plane is used to transmit data information, and mainly includes an SDAP layer, a PDCP layer, an RLC layer, a MAC layer, and a PHY layer. It should be understood that, in different communication technologies, protocol layers of the control plane and the user plane may be divided in different manners, or may be divided in a same manner. The RRC layer, the SDAP layer, the PDCP layer, the RLC layer, the MAC layer, and the PHY layer all belong to an access stratum (access stratum, AS) layer.

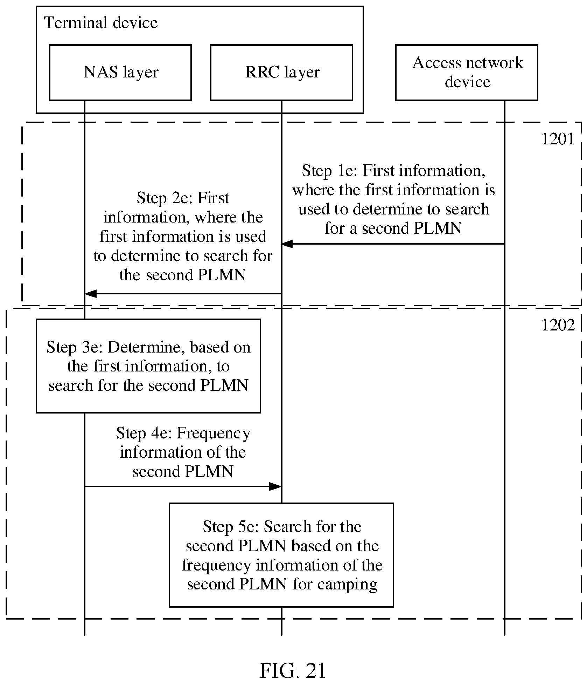

In the second communication method 1200 in embodiments of this application, the terminal device performs corresponding steps by using different protocol layers. As shown in FIG. 21, S1201 is replaced with step 1e, and the RRC layer further performs step 2e. S1202 is replaced with step 3e to step 5e. Step 1e to step 5e are described as follows:
Step 1e: The RRC layer receives the first information from the access network device in the first PLMN.

For example, the first information may be implemented as the information A1, the information B1, the information C1, or the information D1.

Step 2e: The RRC layer sends the first information to the NAS layer. Correspondingly, the NAS layer receives the first information from the RRC layer.

Step 3e: The NAS layer determines, based on the first information, to search for the second PLMN.

For example, when the first information is implemented as the information A1, the NAS layer determines, based on the location area in which the third access network device is located and the information A2, that the terminal device is in the area indicated by the information A2. The information A1 includes the information about the location area in which the third access network device is located. For details, refer to descriptions in FIG. 13.

When the first information is implemented as the information B1, the NAS layer determines, based on the location area in which the first access network device is located and the information B2, that the terminal device is in the area indicated by the information B2. The information B1 includes the location area in which the first access network device is located. For details, refer to descriptions in FIG. 15.

When the first information is implemented as the information C1, the NAS layer determines that a PLMN indicated by the second PLMN information belongs to an EPLMN of the NAS layer, and determines to search for the second PLMN. The information C1 includes inter-network PLMN information, for example, a target EPLMN. For details, refer to descriptions in FIG. 18.

When the first information is implemented as the information D1, the NAS layer determines that the PLMN indicated by the second PLMN information belongs to the HPLMN of the NAS layer, and determines to search for the second PLMN. The information D1 includes inter-network PLMN information, namely, HPLMN information. For details, refer to the description in FIG. 19.

Step 4e: The NAS layer sends frequency information of the second PLMN to the RRC layer. Correspondingly, the RRC layer receives the frequency information of the second PLMN from the NAS layer.

Step 5e: The RRC layer searches for the second PLMN for camping based on the frequency information of the second PLMN.

For example, when the second PLMN is implemented as the target EPLMN, the RRC layer searches for the frequency of the target EPLMN, and then camps on the target EPLMN. When the second PLMN is implemented as the HPLMN, the RRC layer searches for the frequency of the HPLMN, and then camps on the HPLMN. For details, refer to a conventional technology. Details are not described herein again.

The foregoing mainly describes the solutions provided in embodiments of this application from a perspective of interaction between network elements. Correspondingly, embodiments of this application further provide a communication apparatus. The communication apparatus may be the network element in the foregoing method embodiment, an apparatus including the foregoing network element, or a component that can be used in a network element. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is executed in a manner of hardware or computer software driving hardware depends on a specific application and a design constraint condition of the technical solution. A person skilled in the art may use different methods to implement the described functions for each particular application, but it should not be considered that the implementation goes beyond the scope of this application.

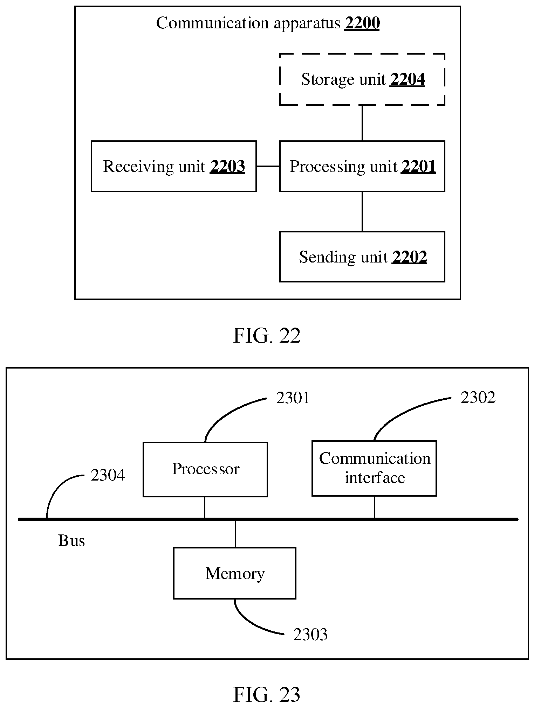

For example, FIG. 22 is a schematic diagram of a structure of a communication apparatus 2200. The communication apparatus 2200 includes a processing unit 2201, a sending unit 2202, and a receiving unit 2203.

In a possible example, that the communication apparatus 2200 is a terminal device is used as an example, and the processing unit 2201 is configured to support the terminal device in performing S704a, S704b, and S704c in FIG. 7, and/or another processing operation that needs to be performed by the terminal device in this embodiment of this application. The sending unit 2202 is configured to support another sending operation that needs to be performed by the terminal device in this embodiment of this application. The receiving unit 2203 is configured to support the terminal device in performing S703 in FIG. 7 and/or another receiving operation that needs to be performed by the terminal device in this embodiment of this application.

In another possible example, that the communication apparatus 2200 is a terminal device is used as an example, and the processing unit 2201 is configured to support the terminal device in performing S1202 in FIG. 12 and/or another processing operation that needs to be performed by the terminal device in this embodiment of this application. The sending unit 2202 is configured to support another sending operation that needs to be performed by the terminal device in this embodiment of this application. The receiving unit 2203 is configured to support the terminal device in performing S1201 in FIG. 12 and/or another receiving operation that needs to be performed by the terminal device in this embodiment of this application.

In a possible example, that the communication apparatus 2200 is a first access network device is used as an example, and the processing unit 2201 is configured to support the first access network device in performing S701 and S702 in FIG. 7, and/or another processing operation that needs to be performed by the first access network device in this embodiment of this application. The sending unit 2202 is configured to support the first access network device in performing S703 in FIG. 7 and/or another sending operation that needs to be performed by the first access network device in this embodiment of this application. The receiving unit 2203 is configured to support another receiving operation that needs to be performed by the first access network device.

In still another possible example, that the communication apparatus 2200 is an access network device is used as an example, and the processing unit 2201 is configured to support another processing operation that needs to be performed by the access network device in this embodiment of this application. The sending unit 2202 is configured to support the access network device in performing S1201 in FIG. 12 and/or another sending operation that needs to be performed by the access network device in this embodiment of this application. The receiving unit 2203 is configured to support another receiving operation that needs to be performed by the access network device in this embodiment of this application.

Optionally, the communication apparatus 2200 may further include a storage unit 2204, configured to store program code and data of the communication apparatus. The data may include but is not limited to original data, intermediate data, or the like.

The processing unit 2201 may be a processor or a controller, for example, may be a CPU, a general-purpose processor, an application-specific integrated circuit (application-specific integrated circuit, ASIC), a field programmable gate array (field programmable gate array, FPGA) or another programmable logic device, a transistor logic device, a hardware component, or any combination thereof. The processing unit 2201 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

The sending unit 2202 may be a communication interface, a transmitter, a transmitter circuit, or the like. The communication interface is a general term. During specific implementation, the communication interface may include a plurality of interfaces, for example, may include an interface between the terminal device and the access network device and/or another interface.

The receiving unit 2203 may be a communication interface, a receiver, a receiver circuit, or the like. The communication interface is a general term. During specific implementation, the communication interface may include a plurality of interfaces, for example, may include an interface between the terminal device and the access network device and/or another interface.

The sending unit 2202 and the receiving unit 2203 may be physically or logically implemented as a same unit.

The storage unit 2204 may be a memory.

When the processing unit 2201 is a processor, the sending unit 2202 and the receiving unit 2203 are communication interfaces, and the storage unit 2204 is a memory, the communication apparatus in this embodiment of this application may be shown in FIG. 23.

Refer to FIG. 23. The communication apparatus includes a processor 2301, a communication interface 2302, and a memory 2303. Optionally, the communication apparatus may further include a bus 2304. The communication interface 2302, the processor 2301, and the memory 2303 may be connected to each other through the bus 2304. The bus 2304 may be a peripheral component interconnect (peripheral component interconnect, PCI) bus, an extended industry standard architecture (extended industry standard architecture, EISA) bus, or the like. The bus 2304 may be classified into an address bus, a data bus, a control bus, and the like. For ease of representation, only one thick line is used to represent the bus in FIG. 23, but this does not mean that there is only one bus or only one type of bus.

Optionally, an embodiment of this application further provides a computer program product carrying computer instructions. When the computer instructions are run on a computer, the computer is enabled to perform the method described in the foregoing embodiment.

Optionally, an embodiment of this application further provides a computer-readable storage medium. The computer-readable storage medium stores computer instructions. When the computer instructions are run on a computer, the computer is enabled to perform the method described in the foregoing embodiment.

Optionally, an embodiment of this application further provides a chip, including a processing circuit and a transceiver circuit. The processing circuit and the transceiver circuit are configured to implement the method described in the foregoing embodiment. The processing circuit is configured to perform a processing action in a corresponding method, and the transceiver circuit is configured to perform a receiving/sending action in the corresponding method.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

In the several embodiments provided in this application, it should be understood that the disclosed system, apparatus, and method may be implemented in other manners. For example, the apparatus embodiment described above is merely an example. For example, division into the modules is merely logical function division and there may be another division manner in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

The units described as separate parts may or may not be physically separate, and a part displayed as a unit may or may not be a physical unit, that is, may be located at one position, or may be distributed on a plurality of devices. Some or all of the units may be selected based on an actual requirement to achieve the objectives of the solutions of embodiments.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions of this application essentially or the part making contribution may be implemented in a form of a software product. The computer software product is stored in a readable storage medium, for example, a floppy disk, a hard disk, or an optical disc of a computer, and includes several instructions for instructing a computer device (which may be a personal computer, a server, or a network device) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
obtaining, by a first access network device, information about a home public land mobile network HPLMN of a terminal device, wherein the first access network device is an access network device in a PLMN currently accessed by the terminal device, and the PLMN currently accessed by the terminal device is different from the HPLMN of the terminal device; and
sending, by the first access network device, first information to the terminal device based on the information about the HPLMN of the terminal device, wherein the first information is related to the HPLMN of the terminal device, and the first information is used by the terminal device to perform measurement, HPLMN search, or reselection.

2. The method according to claim 1, wherein the first information indicates to start to search for the HPLMN of the terminal device.

3. The method according to claim 1, wherein the first information comprises a cell selection policy;
the cell selection policy is further related to the PLMN currently accessed by the terminal device; and
measurement configuration information is used by the terminal device to perform reselection.

4. The method according to claim 3, wherein the cell selection policy indicates that a first priority is higher than a second priority, the first priority is a reselection priority of a first cell in the HPLMN of the terminal device, and the second priority is a reselection priority of a second cell in the PLMN currently accessed by the terminal device.

5. The method according to claim 1, wherein the first information comprises measurement configuration information;
the measurement configuration information comprises information about a frequency in the HPLMN of the terminal device and information about measurement gap duration of the frequency; and
the measurement configuration information is used by the terminal device to perform measurement.

6. The method according to claim 5, wherein the frequency in the HPLMN of the terminal device comprises at least one of the following:
a frequency of a first communication standard in the HPLMN of the terminal device; or
a frequency of a second communication standard in the HPLMN of the terminal device, wherein
the first communication standard is different from the second communication standard.

7. The method according to any one of claims 1 to 6, wherein the obtaining, by a first access network device, information about a home public land mobile network HPLMN of a terminal device comprises:
receiving, by the first access network device, a first message from a first core network device, wherein the first core network device is a core network device in the PLMN currently accessed by the terminal device, and the first message comprises the information about the HPLMN of the terminal device.

8. The method according to claim 7, wherein the first message comprises an initial context setup request message.

9. The method according to any one of claims 1 to 6, wherein the obtaining, by a first access network device, information about a home public land mobile network HPLMN of a terminal device comprises:
receiving, by the first access network device, a second message from the terminal device, wherein the second message comprises information about the PLMN currently accessed by the terminal device, and there is a correspondence between the PLMN currently accessed by the terminal device and the HPLMN of the terminal device; and
determining, by the first access network device, the information about the HPLMN of the terminal device based on the second message and the correspondence.

10. The method according to any one of claims 1 to 6, wherein the obtaining, by a first access network device, information about a home public land mobile network HPLMN of a terminal device comprises:
receiving, by the first access network device, a third message from the terminal device, wherein the third message comprises the information about the HPLMN of the terminal device.

11. The method according to any one of claims 1 to 6, wherein the method further comprises:
sending, by the first access network device, a fourth message to a second access network device, wherein the fourth message comprises the information about the HPLMN of the terminal device, the first access network device is an access network device before the terminal device is handed over, the second access network device is an access network device after the terminal device is handed over, the second access network device and the first access network device belong to a same PLMN, the fourth message is used by the second access network device to send second information based on the information about the HPLMN of the terminal device, the second information is related to the HPLMN of the terminal device, and the second information is used by the terminal device to perform measurement, HPLMN search, or reselection.

12. The method according to any one of claims 1 to 6, wherein the method further comprises:
sending, by the first access network device, a handover required message to a first core network device, wherein the first access network device is an access network device before the terminal device is handed over, and the first core network device is a core network device in the PLMN currently accessed by the terminal device;
sending, by the first core network device based on the handover required message, the information about the HPLMN of the terminal device to a second access network device, wherein the second access network device is an access network device after the terminal device is handed over; and
sending, by the second access network device, second information to the terminal device based on the information about the HPLMN of the terminal device, wherein the second information is related to the HPLMN of the terminal device, and the second information is used by the terminal device to perform measurement, HPLMN search, or reselection.

13. The method according to claim 12, wherein the handover required message comprises the information about the HPLMN information of the terminal device.

14. The method according to any one of claims 1 to 13, wherein the method further comprises:
receiving, by the first access network device, a measurement report from the terminal device, wherein the measurement report is determined based on the measurement configuration information; and
sending, by the first access network device, the first message to the terminal device, wherein the first message indicates a target cell, the target cell is determined based on the measurement report and priority information, the target cell belongs to a cell in the HPLMN of the terminal device, the priority information indicates that a third priority is higher than a fourth priority, both the third priority and the fourth priority are handover priorities or redirection priorities, the third priority is a priority of a cell in the HPLMN of the terminal device, and the fourth priority is a priority of a cell in the PLMN currently accessed by the terminal device.

15. A communication method, comprising:
receiving, by a terminal device, first information from an access network device in a first public land mobile network PLMN, wherein the first PLMN is a PLMN currently accessed by the terminal device, the first information is used by the terminal device to determine to search for a second PLMN, and the first PLMN is different from the second PLMN; and
searching for, by the terminal device based on the first information, the second PLMN for camping.

16. The method according to claim 15, wherein the first PLMN comprises an HPLMN of the terminal device, and the second PLMN comprises an equivalent public land mobile network EPLMN of the terminal device.

17. The method according to claim 16, wherein the method further comprises:
receiving, by the terminal device, second information from a core network device in the first PLMN, wherein the second information comprises information about an area covered by the second PLMN; and
the searching for, by the terminal device based on the first information, the second PLMN for camping comprises:
determining, by the terminal device based on a location area in which the access network device is located and the second information, that the terminal device is located in an area indicated by the second information, wherein the first information comprises information about the location area in which the access network device is located; and
in response to that the terminal device is located in the area indicated by the second information, searching for the second PLMN for camping.

18. The method according to claim 17, wherein the area covered by the second PLMN comprises at least one of the following:
an overlapping area, wherein the overlapping area is an area in which a service area of the core network device overlaps the area covered by the second PLMN;
a boundary area, wherein the boundary area is an area, in the overlapping area, whose distance from a boundary of the overlapping area is less than a first threshold; or
a first area, wherein the first area is an area, in the boundary area, whose distance from the terminal device is less than a second threshold.

19. The method according to claim 18, wherein the terminal device is located within the boundary area, or the terminal device is located outside the boundary area.

20. The method according to any one of claims 17 to 19, wherein the second information is transmitted by the terminal device by using an attach accept message or a tracking area update TAU accept message.

21. The method according to any one of claims 17 to 19, wherein the second information is transmitted by using a user equipment configuration update message.

22. The method according to claim 15, wherein the first PLMN comprises an EPLMN of the terminal device, and the second PLMN comprises an HPLMN of the terminal device.

23. The method according to claim 22, wherein the method further comprises:
receiving, by the terminal device, second information from a core network device in the first PLMN, wherein the second information indicates at least a partial coverage area of the first PLMN, and the partial coverage area of the first PLMN belongs to a boundary area of the first PLMN; and
the searching for, by the terminal device based on the first information, the second PLMN for camping comprises:
determining, by the terminal device based on a location area in which the access network device is located and the second information, that the terminal device is located in an area indicated by the second information, wherein the first information comprises information about the location area in which the access network device is located; and
in response to that the terminal device is located in the area indicated by the second information, searching for the second PLMN for camping.

24. The method according to claim 23, wherein the partial coverage area of the first PLMN comprises at least one of the following:
an overlapping area, wherein the overlapping area is an area in which a service area of the core network device overlaps the boundary area of the first PLMN; and
a first area, wherein the first area is an area, in the overlapping area, whose distance from the terminal device is less than a second threshold.

25. The method according to claim 17, 18, 23, or 24, wherein the second information is transmitted by using a registration accept message.

26. The method according to claim 16 or 22, wherein the searching for, by the terminal device based on the first information, the second PLMN for camping comprises:
searching for, by the terminal device based on information about the second PLMN, the second PLMN for camping, wherein the first information comprises the information about the second PLMN.

27. The method according to claim 26, wherein the terminal device receives the first information from the access network device via a system message.

28. The method according to claim 27, wherein the system message carries the first information via a system information block SIB, and the SIB comprises at least one of the following:
a first SIB, wherein the first SIB is a SIB used to carry intra-frequency information, the intra-frequency information comprises information about a frequency in the second PLMN, and the frequency in the intra-frequency information is the same as a frequency of a cell on which the terminal device currently camps;
a second SIB, wherein the second SIB is a SIB used to carry inter-frequency information, the inter-frequency information comprises information about a frequency in the second PLMN, and the frequency in the inter-frequency information is different from a frequency of a cell on which the terminal device currently camps; and
a third SIB, wherein the third SIB is a SIB used to carry inter-system information, the inter-system information comprises information about a communication standard of the second PLMN, and the communication standard in the inter-system information is different from a communication standard of the cell on which the terminal device currently camps.

29. A communication apparatus, comprising: a processor and a memory, wherein the processor is coupled to the memory, the memory stores program instructions, and when the program instructions stored in the memory are executed by the processor, the method according to any one of claims 1 to 28 is implemented.

30. A chip, comprising a processor and an input/output interface, wherein the input/output interface is configured to receive a signal from a communication apparatus other than the chip and transmit the signal to the processor, or send a signal from the processor to a communication apparatus other than the chip, and the processor is configured to implement the method according to any one of claims 1 to 28 by using a logic circuit or by executing code instructions.

31. A computer-readable storage medium, wherein the storage medium stores a computer program or instructions; and when the computer program or the instructions are executed by a communication apparatus, the method according to any one of claims 1 to 28 is implemented.
